(19) **Europäisches Patentamt European Patent Office Office européen des brevets**

(11) **EP 4 760 369 A2**

(12) **EUROPEAN PATENT APPLICATION**

(43) Date of publication:
**17.06.2026 Bulletin 2026/25**

(21) Application number: **26169591.0**

(22) Date of filing: **31.03.2026**

(51) International Patent Classification (IPC):
**G02B 13/00** $^{(2006.01)}$ **G02B 13/02** $^{(2006.01)}$

(52) Cooperative Patent Classification (CPC):
**G02B 13/0045; G02B 13/0065; G02B 13/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.04.2025 CN 202510464921**

(71) Applicant: **Jiangxi OFILM Optical Co., Ltd.**
**Nanchang, Jiangxi 330096 (CN)**

(72) Inventors:
• **ZOU, Jinhua**
  **Shenzhen, Guangdong 518106 (CN)**
• **DING, Kuo**
  **Shenzhen, Guangdong 518106 (CN)**
• **LIU, Binbin**
  **Shenzhen, Guangdong 518106 (CN)**

(74) Representative: **Metida**
**Gyneju str. 16**
**01109 Vilnius (LT)**

(54) **OPTICAL LENS, CAMERA MODULE, AND ELECTRONIC DEVICE**

(57) The present disclosure provides an optical lens, a camera module, and an electronic device. A first lens group of the optical lens includes a first lens having positive refractive power. An object side surface of the first lens is convex near the optical axis. A second lens group of the optical lens includes a second lens, a third lens, a fourth lens, and a fifth lens arranged sequentially along an optical axis from an object side to an image side. The second lens has negative refractive power, an object side surface of the second lens is convex near the optical axis, an image side surface of the second lens is concave near the optical axis. The third lens has positive refractive power, and an object side surface of the third lens is convex near the optical axis. The fourth and fifth lenses have refractive power. The second lens group is movable along the optical axis between the first lens group and the imaging surface of the optical lens. The optical lens satisfies following relationships: 18deg<FOV<28deg, and 2.1<FNO<2.8. The optical lens, camera module, and electronic device of the present disclosure can achieve miniaturization and reduce impact on focusing speed.

FIG.1A

EP 4 760 369 A2

Spherical aberration

Astigmatism
Image height (mm)

Distortion
Image height (mm)

650nm
610nm
555nm
510nm
470nm
435nm

S(Sagittal)
T(tangential)

-0.050 -0.025  0.0  0.025  0.050
Deviation of focus poin (mm)
(A)

-0.08  -0.04  0.0  0.04  0.08
Deviation of focus poin (mm)
(B)

-2  -1  0  1  2
Distortion (%)
(C)

## FIG.1B

## FIG.1C

**Description**

FIELD

The subject matter relates to the field of optical imaging, and more particularly, to an optical lens, a camera module, and an electronic device.

BACKGROUND

With increased demand for miniaturization of smart terminals such as mobile phones and tablet computers, new challenges are created for the design of optical lens in the smart terminals. In related art, a focusing method of the optical lens is usually implemented by moving the entire lens through a focusing motor to align its imaging surface with the photosensitive surface of the image sensor. Therefore, a relatively large space (mechanical back focus) needs to be reserved between the lens and the image sensor. Moving the entire lens requires significant force from the focusing motor, which leads to an increase in the size of the focusing motor size and a significant reduction in focusing speed. Moreover, due to the miniaturization requirements of the smart terminals, the design and manufacture of the optical lens that utilize the movement of the entire lens for focusing is difficult, posing a challenge to mass production.

SUMMARY

The present disclosure discloses an optical lens, a camera module, and an electronic device, which may achieve miniaturization, reduce impact on focusing speed, and facilitate design, manufacture and mass production.

A first aspect of the present disclosure provides an optical lens. The optical lens includes, in order from an object side to an image side along an optical axis, a first lens group and a second lens group. The first lens group includes a first lens having positive refractive power, and an object side surface of the first lens is convex near the optical axis. The second lens group includes, in order from the object side to the image side along an optical axis, a second lens, a third lens, a fourth lens, and a fifth lens. The second lens has negative refractive power, an object side surface of the second lens is convex near the optical axis, and an image side surface of the second lens is concave near the optical axis. The third lens has positive refractive power, and an object side surface of the third lens is convex near the optical axis. The fourth lens has refractive power, and the fifth lens has refractive power. The first lens group is fixed relative to an imaging surface of the optical lens, and the second lens group is movable along the optical axis between the first lens group and the imaging surface of the optical lens. The optical lens satisfies following relationships: 18deg<FOV<28deg, and 2.1<FNO<2.8, wherein FOV is a maximum field of view of the optical lens, and FNO is an aperture number of the optical lens.

A second aspect of the present disclosure provides a camera module. The camera module includes an image sensor and an optical lens as described in the first aspect. The image sensor is located at the image side of the optical lens. The camera module with the optical lens mentioned above may achieve miniaturization, reduce impact on focusing speed, and facilitate design, manufacture and mass production.

A third aspect of the present disclosure provides an electronic device. The electronic device includes a housing and the camera module as described in the second aspect. The camera module is located on the housing. The electronic device with the camera module mentioned above may achieve miniaturization, reduce impact on focusing speed, and facilitate design, manufacture and mass production.

In the optical lens of the present disclosure, in order to achieve miniaturization and reduce impact on focusing speed, five lenses are divided into the first lens group and the second lens group. The first lens group is fixed relative to the imaging surface of the optical lens, and the second lens group can move along the optical axis between the first lens group and the imaging surface of the optical lens, thereby enabling the optical lens to have a continuous internal focusing function. Moreover, by only moving the second lens group, the burden on the motor may be further reduced, thereby achieving fast internal focusing of the optical lens even when using a lower-power motor. In addition, the five lenses with refractive power evenly distribute the pressure of light refraction to each lens, thereby reducing the task of refracting light for each lens and avoiding excessive curvature of the lens that will increase tolerance sensitivity.

Specifically, the first lens has positive refractive power, and the object side surface of the first lens is convex near the optical axis, which may allow light beams to better enter the first lens. The second lens has negative refractive power, the object side of the second lens is convex near the optical axis, and the image side surfaces is concave near the optical axis, which may be conducive to correcting aberrations generated by the first lens, thereby improving the imaging effect of the optical lens. The third lens has positive refractive power, and the object side surface of the third lens is convex near the optical axis, which may be conducive to reducing the incident angle of light beams entering the optical lens, thereby allowing as much light as possible to enter the optical lens. The fourth lens has refractive power, which may be conducive to correcting spherical aberration, coma, and distortion generated by the first lens group, thereby further improving the imaging quality of the optical lens. The fifth lens has refractive power, which may shorten the total length of the optical system, correct aberrations, and reduce the exiting angle of the light beams, thereby allowing large-angle light beams to be incident on the imaging surface of the optical lens for imaging. Therefore, the image quality of the optical lens may be improved.

In addition, the optical lens satisfies the following relationships: 18deg<FOV<28deg, and 2.1<FNO<2.8, such that the optical lens may have large aperture, small field of view, and telephoto imaging characteristics.

BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.

FIG. 1A is a schematic diagram of an optical lens according to a first embodiment of the present disclosure in a long object distance state.

FIG. 1B shows a longitudinal spherical aberration curve diagram (mm), an astigmatism curve diagram (mm), and a distortion curve diagram (%) of the optical lens of the first embodiment of the present disclosure in the long object distance state.

FIG. 1C is a schematic diagram of an optical path of the optical lens of the first embodiment of the present disclosure in the long object distance state.

FIG. 2A is a schematic diagram of an optical lens according to a first embodiment of the present disclosure in a short object distance state.

FIG. 2B shows a longitudinal spherical aberration curve diagram (mm), an astigmatism curve diagram (mm), and a distortion curve diagram (%) of the optical lens of the first embodiment of the present disclosure in the short object distance state.

FIG. 2C is a schematic diagram of an optical path of the optical lens of the first embodiment of the present disclosure in the short object distance state.

FIG. 3A is a schematic diagram of an optical lens according to a second embodiment of the present disclosure in a long object distance state.

FIG. 3B shows a longitudinal spherical aberration curve diagram (mm), an astigmatism curve diagram (mm), and a distortion curve diagram (%) of the optical lens of the second embodiment of the present disclosure in the long object distance state.

FIG. 4A is a schematic diagram of an optical lens according to a second embodiment of the present disclosure in a short object distance state.

FIG. 4B shows a longitudinal spherical aberration curve diagram (mm), an astigmatism curve diagram (mm), and a distortion curve diagram (%) of the optical lens of the second embodiment of the present disclosure in the short object distance state.

FIG. 5A is a schematic diagram of an optical lens according to a third embodiment of the present disclosure in a long object distance state.

FIG. 5B shows a longitudinal spherical aberration curve diagram (mm), an astigmatism curve diagram (mm), and a distortion curve diagram (%) of the optical lens of the third embodiment of the present disclosure in the long object distance state.

FIG. 6A is a schematic diagram of an optical lens according to a third embodiment of the present disclosure in a short object distance state.

FIG. 6B shows a longitudinal spherical aberration curve diagram (mm), an astigmatism curve diagram (mm), and a distortion curve diagram (%) of the optical lens of the third embodiment of the present disclosure in the short object distance state.

FIG. 7A is a schematic diagram of an optical lens according to a fourth embodiment of the present disclosure in a long object distance state.

FIG. 7B shows a longitudinal spherical aberration curve diagram (mm), an astigmatism curve diagram (mm), and a distortion curve diagram (%) of the optical lens of the fourth embodiment of the present disclosure in the long object distance state.

FIG. 8A is a schematic diagram of an optical lens according to a fourth embodiment of the present disclosure in a short object distance state.

FIG. 8B shows a longitudinal spherical aberration curve diagram (mm), an astigmatism curve diagram (mm), and a distortion curve diagram (%) of the optical lens of the fourth embodiment of the present disclosure in the short object distance state.

FIG. 9A is a schematic diagram of an optical lens according to a fifth embodiment of the present disclosure in a long object distance state.

FIG. 9B shows a longitudinal spherical aberration curve diagram (mm), an astigmatism curve diagram (mm), and a distortion curve diagram (%) of the optical lens of the fifth embodiment of the present disclosure in the long object distance state.

FIG. 10A is a schematic diagram of an optical lens according to a fifth embodiment of the present disclosure in a short object distance state.

FIG. 10B shows a longitudinal spherical aberration curve diagram (mm), an astigmatism curve diagram (mm), and a distortion curve diagram (%) of the optical lens of the fifth embodiment of the present disclosure in the short object distance state.

FIG. 11A is a schematic diagram of an optical lens according to a sixth embodiment of the present disclosure in a long object distance state.

FIG. 11B shows a longitudinal spherical aberration curve diagram (mm), an astigmatism curve diagram (mm), and a distortion curve diagram (%) of the optical lens of the sixth embodiment of the present disclosure in the long object distance state.

FIG. 12A is a schematic diagram of an optical lens according to a sixth embodiment of the present disclosure in a short object distance state.

FIG. 12B shows a longitudinal spherical aberration curve diagram (mm), an astigmatism curve diagram (mm), and a distortion curve diagram (%) of the optical lens of the sixth embodiment of the present disclosure in the short object distance state.

FIG. 13A is a schematic diagram of an optical lens according to a seventh embodiment of the present disclosure in a long object distance state.

FIG. 13B shows a longitudinal spherical aberration curve diagram (mm), an astigmatism curve diagram (mm), and a distortion curve diagram (%) of the optical lens of the seventh embodiment of the present disclosure in the long object distance state.

FIG. 14A is a schematic diagram of an optical lens according to a seventh embodiment of the present disclosure in a short object distance state.

FIG. 14B shows a longitudinal spherical aberration curve diagram (mm), an astigmatism curve diagram (mm), and a distortion curve diagram (%) of the optical lens of the seventh embodiment of the present disclosure in the short object distance state.

FIG. 15 is a schematic diagram of a camera module according to an embodiment of the present disclosure.

FIG. 16 is a schematic diagram of an electronic device according to an embodiment of the present disclosure.


DETAILED DESCRIPTION

The embodiments of this application are described in detail below. Examples of these embodiments are shown in the accompanying drawings, wherein the same or similar reference numerals denote the same or similar elements or elements having the same or similar functions throughout. The embodiments described below with reference to the accompanying drawings are exemplary and are only used to explain this application, and should not be construed as limiting this application.

In addition, the terms "first" and "second" are mainly used to distinguish between different devices, components, or portions (the specific types and structures may be the same or different), which are not intended to indicate or imply the relative importance and quantity of the indicated devices, components, or portions. Unless otherwise specified, the term "a plurality of" means two or more.

Implementations of the present application will now be described, by way of embodiments, with reference to the above figures.

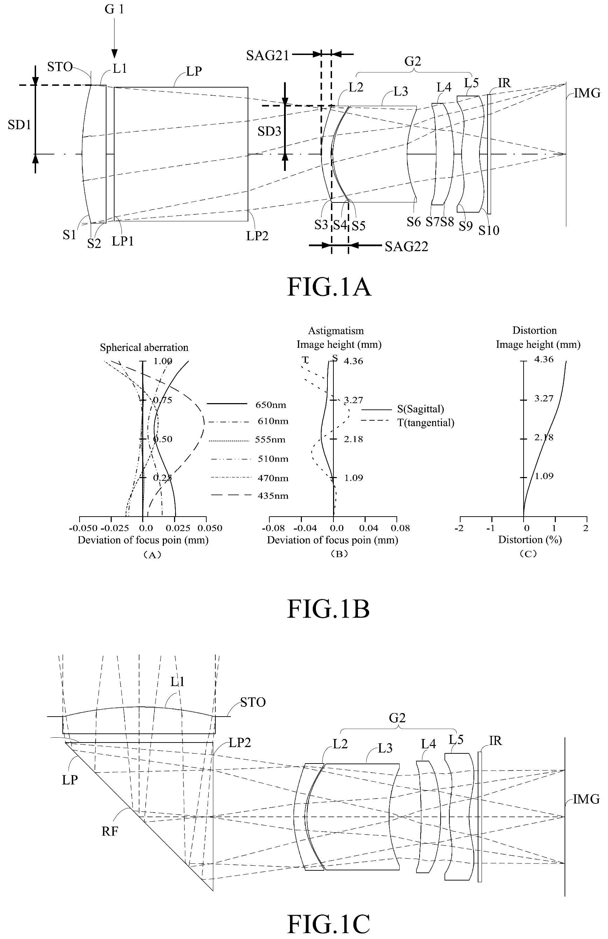

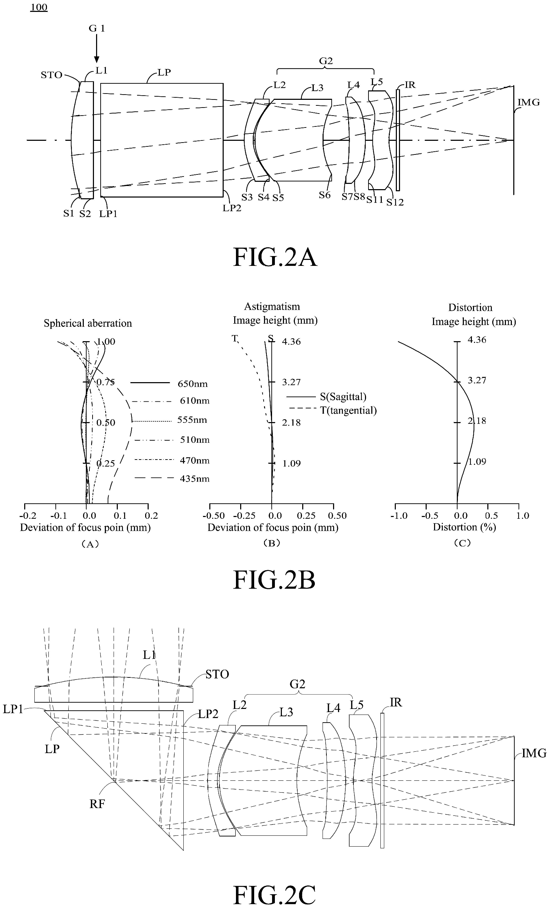

Referring to FIG. 1A, FIG.1C, FIG. 2A, and FIG. 2C, a first aspect of the present disclosure provides an optical lens 100. The optical lens 100 includes a first lens group G1 and a second lens group G2 arranged in order from an object side to an image side along an optical axis. The first lens group G1 includes a first lens L1. The second lens group G2 includes a second lens L2, a third lens L3, a fourth lens L4, and a fifth lens L5 arranged in order from the object side to the image side along the optical axis. The first lens group G1 is fixed relative to an imaging surface IMG of the optical lens 100. The second lens group G2 moves along the optical axis between the first lens group G1 and the imaging surface IMG of the optical lens 100, thereby allowing the optical lens 100 to continuously perform focusing between a short object distance state and a long object distance state, such that the optical lens 100 may have a continuous internal focusing function. Furthermore, by only moving the second lens group G2, the burden on the motor may be further reduced, thereby achieving fast internal focusing of the optical lens 100 even when using a lower-power motor.

It is understood that the short object distance state refers to a state where the object distance of the optical lens 100 is 300 mm. The long object distance state refers to a state where the object distance of the optical lens 100 is infinity.

In some embodiments, the first lens L1 has positive refractive power, the second lens L2 has negative refractive power, the third lens L3 has positive refractive power, the fourth lens L4 has either negative or positive refractive power, and the fifth lens L5 has either positive or negative refractive power. During the imaging process, light beams sequentially enter the first lens L1, the second lens L2, the third lens L3, the fourth lens L4, and the fifth lens L5 from an object side of the first lens L1, and finally form images on an imaging surface IMG of the optical lens 100.

Furthermore, the object side surface S1 of the first lens L1 is convex near the optical axis, and an image side surface S2 of the first lens L1 may be flat, convex, or concave near the optical axis. An object side surface S3 of the second lens L2 is convex near the optical axis, and an image side surface S4 of the second lens L2 is concave near the optical axis. An object side surface S5 of the third lens L3 is convex near the optical axis, and an image side surface S6 of the third lens L3 may be concave or convex near the optical axis. An object side surface S7 of the fourth lens L4 may be concave or convex near the optical axis, and an image side surface S8 of the fourth lens L4 may be concave or convex near the optical axis. An object side surface S9 of the fifth lens L5 may be convex or concave near the optical axis, and an image side surface S10 of the fifth lens L5 may be concave or convex near the optical axis.

The present disclosure designs the refractive power and surface shape of the five lenses. The first lens L1 has positive refractive power, and the object side surface of the first lens L1 is convex near the optical axis, which may facilitate the collection of light beams in the field of view range. The second lens L2 has negative refractive power, the object side surface S3 of the second lens L2 is convex near the optical axis, and the image side surface of the second lens L2 is concave near the optical axis, which may correct the aberrations generated by the first lens L1. The third lens L3 has positive refractive power, and the object side surface of the third lens L3 is convex near the optical axis, which may reduce the amount of light entering the optical lens 100 from the preceding lenses, thereby reducing the incident angle of light beams. The fourth lens L4 has refractive power, which may correct spherical aberration, coma, and distortion generated by the first lens group. The fifth lens L5 has refractive power, which may effectively control the total length of the optical lens 100, correct distortion and astigmatism, and control the exiting angle of light beams exiting, thereby allowing large-angle light beams to be incident on the imaging surface IMG of the optical lens 100. Therefore, the image quality of the optical lens 100 may be improved.

In some embodiments, the optical lens 100 may be applied to electronic devices such as a smartphone or a tablet computer. Therefore, plastic may be used as the material for the first lens L1, second lens L2, third lens L3, fourth lens L4, and fifth lens L5 to reduce the weight of the optical system 100 and facilitate the processing of complex lens surfaces. The above is only an example. In other examples, the first lens L1 to the fifth lens L5 may be made of glass. Alternatively, a part of the first to five lenses may made of glass, and another part of the first to fifth lenses may made of plastic, that is, the optical lens 100 may include glass lenses and plastic lenses. The material of the lenses are not limited in the embodiment.

In some embodiments, the optical lens 100 may also include a reflective element LP, which may be a prism or a reflector, thereby enabling the optical lens 100 to be configured as a periscope lens. That is, the optical lens 100 may have a telephoto function.

In some embodiments, the reflective element LP may be located between the first lens group G1 and the second lens group G2. The reflective element LP has a light incident surface LP1, a reflective surface RF, and an light exit surface LP2. The first lens group G1 is located on a side where the light incident surface LP1 of the reflective element LP is located, and the second lens group G2 is located on a side where the light exit surface LP2 of the reflective element LP is located. The reflective element LP is fixed relative to the imaging surface IMG of the optical lens 100. The imaging light passes through the first lens group G1, is transmitted into the reflective element LP through the light incident surface LP1, is reflected by the reflective surface RF to the light exit surface LP2, and is transmitted to the second lens group G2 in a series order.

In some embodiments, the reflective element LP is connected to the image side surface of the first lens L1, such that the reflective element LP is fixed relative to the imaging surface of the optical lens 100. For example, the light incident surface LP1 of the reflective element LP may be plat near the optical axis. When the image side surface of the first lens L1 is flat, the light incident surface LP1 of the reflective element LP may be attached to the image side surface of the first lens L1, or the reflective element LP may be spaced apart from the image side surface of the first lens L1 along the optical axis, which is not limited in the embodiment.

The reflective element LP is fixed relative to the imaging surface of the optical lens 100. When the second lens group G2 continuously performs focusing between the short object distance state and the long object distance states, what changes is the distance from the light exit surface LP2 of the reflective element LP to the object side surface of the second lens L2 on the optical axis. In other words, in the long object distance state, the second lens group G2 moves away from the reflective element LP, meaning the second lens L2 is furthest from the light exit surface of the reflective element LP. Conversely, in the short object distance state, the second lens group G2 moves closer to the reflective element LP, meaning the second lens L2 is closest to the light exit surface of the reflective element LP.

For example, as shown in FIG. 1C and FIG. 2C, the light is transmitted through the first lens L1, and then transmitted into reflective element LP through the light incident surface LP1, and then reflected by the reflective surface RF to the exit surface LP2, and then transmitted to the second lens L2, and then sequentially transmitted through the second lens L2, the third lens L3, the fourth lens L4 and the fifth lens L5, and finally forms images on the imaging surface of the optical lens 100.

In some embodiments, the optical lens 100 further includes a stop STO, which may be an aperture stop or a field stop, and may be located on the object side surface of the first lens L1. It is understood that in other embodiments, the stop STO may also be located between two lenses. For example, the stop STO may be located between the second lens L2 and the third lens L3, or between the fourth lens L4 and the fifth lens L5 according to actual needs, which is not limited in the embodiment.

In some embodiments, the optical lens 100 further includes a filter IR, which is disposed in the second lens group G2 and located between the fifth lens L5 and the imaging surface IMG of the optical lens 100. The filter IR may move along the optical axis between the fifth lens L5 and the imaging surface IMG of the optical lens 100 under the action of the second lens group. That is, when the second lens group G2 moves relative to the first lens group G1 along the optical axis, the filter IR can move with the second lens group G2. Therefore, when the optical lens 100 is applied to a camera module, compared with the solution of setting the filter IR on an image sensor in the related technologies, the present disclosure may effectively simplify the packaging of the image sensor and facilitate the light and thin design of the image sensor. In some embodiments, the filter IR may be an infrared cut-off filter. The infrared cut-off filter can filter out infrared light, thereby improving image quality, and making the image more consistent with the visual experience of the human eye. It is understood that the filter IR may be made of optical glass coating, colored glass, or other materials according to actual needs, which is not limited in the embodiment.

Since the filter IR moves with the second lens group G2, the distance between the filter IR and the imaging surface IMG of the optical lens changes when the optical lens 100 continuously performs focusing between the short object distance state and the long object distance state.

In some embodiments, the optical lens 100 satisfies the relationship of 18deg<FOV<28deg. Wherein FOV is a maximum field of view of the optical lens 100. When the relationship is satisfied, the optical lens 100 may have a small field of view and telephoto characteristics.

In some embodiments, the optical lens 100 satisfies the relationship of 2.1<FNO<2.8, which may allow the optical lens 100 to have a large aperture.

In some embodiments, the optical lens 100 satisfies the relationship of 6.1<TTL/ImgH<7.2, wherein TTL is a distance from the object surface S1 of the first lens L1 to the imaging surface IMG of the optical lens 100 on the optical axis (i.e., the total length of the optical lens 100), and ImgH is half of an image height corresponding to a maximum field of view of the optical lens 100. By limiting the ratio of the total length of the optical lens 100 to half of the image height corresponding to the maximum field of view of the optical lens 100, the optical lens 100 may achieve miniaturization and have good imaging quality.

In some embodiments, the optical lens 100 satisfies the relationship of $3.85<43.27\times fi/(2\times ImgH\times 23)<4.7$, wherein fi is a focal length of the optical lens 100 in the long object distance state. When the relationship is satisfied, the optical lens 100 may have a larger zoom ratio by controlling the focal length in the long object distance state, thereby improving the telephoto capability of the optical lens.

In some embodiments, the optical lens 100 satisfies the relationship of 3.5<fi/BFL1<4.1, wherein BFL1 is a distance from the image side surface of the fifth lens L5 to the imaging surface IMG of the optical lens 100 on the optical axis in the long object distance state (i.e., the back focal length of the optical lens 100). When the relationship is satisfied, the fifth lens L5 may have sufficient movement distance, and the optical lens 100 may meet the miniaturization requirements, thereby facilitating the continuous focusing between near and far focal lengths of the optical lens 100.

In some embodiments, the optical lens 100 satisfies the following relationship of 0.6<SD3/SD1<1. Wherein, SD1 is a maximum effective half-diameter of the object side surface S1 of the first lens L1, and SD3 is a maximum effective half-diameter of the object side surface S3 of the second lens L2. By limiting the ratio of the maximum effective half-diameter of the object side surface S3 of the second lens L2 to the maximum effective half-diameter of the object side surface S1 of the first lens L1, the object side surface S1 of the first lens L1 may have appropriate aperture, the difference in apertures between the object side surfaces of the first lens L1 and the second lens L2 should not be too large, thereby avoiding a large step difference between the first lens L1 and the second lens L2, such that the light beams may be better reflected from the first lens L1 by the reflecting element and then emitted into the second lens L2. At the same time, a height of the second lens L2 may be reduced, thereby achieving the miniaturization of the optical lens.

In some embodiments, the optical lens 100 satisfies the following relationship of 0.8<CT2/SAG21<2.7, wherein CT2 is a thickness of the second lens L2 on the optical axis, and SAG21 is a distance from the maximum effective half-diameter of the object side surface of the second lens L2 to an intersection of the object side surface of the second lens with the optical axis on the optical axis. When the relationship is satisfied, the second lens L2 may converge the light beams from the first lens and correct distortion and field curvature caused by the first lens, thereby improving the resolution of the optical lens 100. In addition, when the above relationship is satisfied, the refractive power and thickness of the second lens L2 in a perpendicular direction (perpendicular to the optical axis) may be reasonably controlled, thereby preventing the lens from being too thin or too thick, reducing the incident angle light at the imaging surface of the optical lens 100, and reducing the sensitivity of the optical lens 100.

In some embodiments, the optical lens 100 satisfies the relationship of 0.5<CT2/SAG22<1.3, wherein SAG22 is a distance from a maximum effective half-diameter of the image side surface of the second lens L2 to an intersection of the image side surface of the second lens with the optical axis on the optical axis. When the relationship is satisfied, the second lens L2 may converge the light beams from the first lens and correct distortion and field curvature caused by the first lens, thereby improving the resolution of the optical lens 100. In addition, when the above relationship is satisfied, the refractive power and thickness of the second lens L2 in a perpendicular direction (perpendicular to the optical axis) may be reasonably controlled, thereby preventing the lens from being too thin or too thick, reducing the incident angle light at the imaging surface of the optical lens 100, and reducing the sensitivity of the optical lens 100.

In some embodiments, the optical lens 100 satisfies the following relationship of 1.1<CT3/CT2<8. Wherein, CT3 is a thickness of the third lens L3 on the optical axis. When the above relationship is satisfied, the thicknesses of the third lens L3 and the second lens L2 may be effectively controlled, thereby achieving the miniaturization of the optical lens 100, and reducing the sensitivity of the optical lens 100.

In some embodiments, the optical lens 100 satisfies the following relationship of 0.9<CT4/CT5<3.7. Wherein, CT4 is a thickness of the fourth lens L4 on the optical axis, and CT5 is a thickness of the fifth lens L5 on the optical axis. When the above relationship is satisfied, the thicknesses of the fifth lens L5 and the fourth lens L4 may be effectively controlled, thereby achieving the miniaturization of the optical lens 100, and reducing the sensitivity of the optical lens 100.

In some embodiments, the optical lens 100 satisfies the following relationship of 1.5<$\Sigma$CT/CT23<3. Wherein, CT23 is a sum of the thicknesses of the second lens L2 and the third lens L3 on the optical axis, and $\Sigma$CT is a sum of the thicknesses of the first lens L1, second lens L2, third lens L3, fourth lens L4, and fifth lens L5 on the optical axis. By limiting the ratio of a total thickness of all lenses in the optical lens 100 to the sum of the thicknesses of the second lens L2 and the third lens L3, the total thickness of the second and third lenses may be reasonably controlled. Furthermore, the ratio of the sum of the thicknesses of the second lens L2 and the third lens L3 to the total thickness of all lenses in the optical lens 100 is relatively high, thereby achieving the miniaturization of the optical lens 100, and facilitating the processing and assembly of the second lens L2 and the third lens L3.

In some embodiments, the optical lens 100 satisfies the following relationship of 1.8<$\Sigma$CT/CT45<4.5, wherein CT45 is a sum of the thicknesses of the fourth lens L4 and the fifth lens L5 on the optical axis. Thus, by controlling the ratio of the sum of the thicknesses of all lenses in the optical lens to the sum of the thicknesses of the fourth and fifth lenses, the thicknesses of the fourth and fifth lenses may be reasonably controlled, thereby achieving the miniaturization of the optical lens 100, and facilitating the processing and assembly of the fourth and fifth lenses.

In some embodiments, the optical lens 100 satisfies the following relationship of 1<CT1/CT2<2.6. Wherein CT2 is a thickness of the second lens L2 on the optical axis. By limiting the ratio of the thickness of the first lens L1 on the optical axis to the thickness of the second lens L2 on the optical axis, the thicknesses of the first lens L1 and the second lens L2 may be reasonably controlled, thereby achieving the miniaturization of the optical lens 100 and reducing the sensitivity of the optical lens 100. Furthermore, when the relationship is satisfied, the resistance of the first lens L1 to environmental conditions may be enhanced.

In some embodiments, the optical lens 100 satisfies the following relationship of 0.4<CT3/CT4<4.5. When the relationship is satisfied, the ratio of the thickness of the third lens to the thickness of the fourth lens L4 may be effectively controlled, thereby achieving the miniaturization of the optical lens 100, and reducing the sensitivity of the optical lens 100.

In some embodiments, the optical lens 100 satisfies the following relationship of 0.2<CT3/(CT1+CT2+CT4+CT5)<1.1. When the relationship is satisfied, the thickness of each lens may be reasonably controlled, thereby avoiding compromised strength of the optical lens due to excessively thin lenses, and avoiding affecting the processing yield of each lens.

In some embodiments, the optical lens 100 satisfies the following relationship of 1.2<f1/fi<2, wherein f1 is a focal length of the first lens L1, and fi is a focal length of the optical lens 100 in the long object distance state. By controlling the ratio of the focal length of the first lens L1 to the maximum focal length of the optical lens 100 in the long object distance state, the refractive power of the first lens L1 is reasonably allocated, which is conducive to reducing the overall spherical aberration, chromatic aberration, and distortion of the first lens group to a reasonable level, reducing the design difficulty of the rear lenses, improving the overall resolving power of the optical lens 100, and correcting the peripheral aberration of the optical lens 100. In addition, a size of the first lens group may be compressed, which is conducive to forming a small-sized lens 100.

In some embodiments, the optical lens 100 satisfies the following relationship of -1.1 <f2/fi<-0.5, wherein f2 is a focal length of the second lens L2. By controlling the ratio of the focal length of the second lens L2 to the maximum focal length of the optical lens 100 in the long object distance state, the refractive power of the second lens L2 is reasonably allocated, which is conducive to reducing the overall spherical aberration, chromatic aberration, and distortion of the second lens L2 to a reasonable level, reducing the design difficulty of the rear lenses, improving the overall resolving power of the optical lens 100, and correcting the peripheral aberration of the optical lens 100. In addition, a size of the second lens L2 may be compressed, which is conducive to forming a small-sized lens 100.

In some embodiments, the optical lens 100 satisfies the following relationship of 0.3<f3/fi<0.7, wherein f3 is a focal length of the third lens L3. By controlling the ratio of the focal length of the third lens L3 to the maximum focal length of the optical lens 100 in the long object distance state, the refractive power of the third lens L3 is reasonably allocated, which is conducive to reducing the overall spherical aberration, chromatic aberration, and distortion of the third lens L3 to a reasonable level, reducing the design difficulty of the rear lenses, improving the overall resolving power of the optical lens 100, and correcting the peripheral aberration of the optical lens 100. In addition, a size of the third lens L3 may be compressed, which is conducive to forming a small-sized lens 100.

In some embodiments, the optical lens 100 satisfies the following relationship of $0.75<|f4|/fi$, wherein f4 is a focal length of the fourth lens L4. By controlling the ratio of the focal length of the fourth lens L4 to the maximum focal length of the optical lens 100 in the long object distance state, the refractive power of the fourth lens L4 is reasonably allocated, which is conducive to reducing the overall spherical aberration, chromatic aberration, and distortion of the second lens group G2 to a reasonable level, reducing the design difficulty of the rear lenses, and improving the overall resolving power of the optical lens 100, and correcting the peripheral aberration of the optical lens 100. In addition, a size of the second lens group G2 may be compressed, which is conducive to forming a small-sized lens 100.

In some embodiments, the optical lens 100 satisfies the following relationship $0.7<f5/fi$, wherein f5 is a focal length of the fifth lens L5. By controlling the ratio of the focal length of the fifth lens L5 to the maximum focal length of the optical lens 100 in the long object distance state, the refractive power of the fifth lens L5 is reasonably allocated, which is conducive to reducing the overall spherical aberration, chromatic aberration, and distortion of the second lens group to a reasonable level, reducing the design difficulty of the rear lenses, improving the overall resolving power of the optical lens 100, and correcting the peripheral aberration of the optical lens 100. In addition, a size of the second lens group may be compressed, which is conducive to forming a small-sized lens 100.

In some embodiments, the optical lens 100 satisfies the following relationship of $1.6<fG2/fi<5.4$, wherein fG2 is a combined focal length of the second lens group G2, and fi is the focal length of the optical lens 100 in long object distance state. When relationship is satisfied, the relationship between the combined focal length of the second lens group G2 and the maximum focal length of the optical lens in long object distance state may be reasonably balanced, thereby effectively shortening the total optical length of the optical lens and avoiding excessive increases in higher-order spherical aberrations, such that the image quality may be improved.

In some embodiments, the optical lens 100 satisfies the following relationship of $0.9<fi/R1<1.5$, wherein R1 is a radius of curvature of the object surface S1 of the first lens L1 on the optical axis. When the relationship is satisfied, the complexity of the surface of the first lens L1 may be reduced, thereby effectively suppressing the increase of field curvature and distortion, and reducing the difficulty of forming the first lens L1.

In some embodiments, the optical lens 100 satisfies the following relationship of $3.3<fi/R3<4.9$, wherein R3 is a radius of curvature of the object surface S3 of the second lens L2 on the optical axis. When the relationship is satisfied, the complexity of the surface of the second lens L2 may be reduced, thereby effectively suppressing the increase of field curvature and distortion, and reducing the difficulty of forming the second lens L2.

In some embodiments, the optical lens 100 satisfies the following relationship of $5.1<fi/R4<8$, wherein R4 is a radius of curvature of the image side surface S4 of the second lens L2 on the optical axis. When the relationship is satisfied, the complexity of the surface of the second lens L2 may be reduced, thereby effectively suppressing the increase in field curvature and distortion, and reducing the difficulty of forming the second lens L2.

In some embodiments, the optical lens 100 satisfies the following relationship of $3.1<fi/R5<5.8$, wherein R5 is a radius of curvature of the object side surface of the third lens L3 on the optical axis. When the relationship is satisfied, the complexity of the surface of the third lens L3 may be reduced, thereby effectively suppressing the increase of field curvature and distortion, and reducing the difficulty of forming the third lens L3.

In some embodiments, the optical lens 100 satisfies the following relationship of $0.9<fi/|R6|<3.2$, wherein R6 is a radius of curvature of the image side surface of the third lens L3 on the optical axis. When the relationship is satisfied, the complexity of the surface of the third lens L3 may be reduced, thereby effectively suppressing the increase of field curvature and distortion, and reducing the difficulty of forming the third lens L3.

In some embodiments, the optical lens 100 satisfies the following relationship of $0.9<fi/|R7|<5$, wherein R7 is a radius of curvature of the object surface S7 of the fourth lens L4 on the optical axis. When the relationship is satisfied, the complexity of the surface of the fourth lens L4 may be reduced, thereby effectively suppressing the increase of field curvature and distortion, and reducing the difficulty of forming the fourth lens L4.

In some embodiments, the optical lens 100 satisfies the following relationship of $0.6<fi/|R8|<5.9$, wherein R8 is a radius of curvature of the image side surface S8 of the fourth lens L4 on the optical axis. When the relationship is satisfied, the complexity of the surface of the fourth lens L4 may be reduced, thereby effectively suppressing the increase in field curvature and distortion, and reducing the difficulty of forming the fourth lens L4.

In some embodiments, the optical lens 100 satisfies the following relationship of $0.6<fi/|R9|<4.9$, wherein R9 is a radius of curvature of the object surface S9 of the fifth lens L5 on the optical axis. When the relationship is satisfied, the complexity of the surface of the fifth lens L5 may be reduced, thereby effectively suppressing the increase of field curvature and distortion, and reducing the difficulty of forming the fifth lens L5.

In some embodiments, the optical lens 100 satisfies the following relationship of $1.3<fi/|R10|<5.3$, wherein R10 is a radius of curvature of the image side surface S10 of the fifth lens L5 on the optical axis. When the relationship is satisfied, the complexity of the surface of the fifth lens L5 may be reduced, thereby effectively suppressing the increase of field curvature and distortion, and reducing the difficulty of forming the fifth lens L5.

In some embodiments, the optical lens 100 satisfies the relationship of 1.1mm<Bzl-Bz2<3.8mm. Wherein, Bz1 is a distance from the light exit surface of the reflective element LP to the object side surface of the second lens L2 on the optical axis when the optical lens 100 is in the long object distance state, and Bz2 is a distance from the light exit surface of the reflective element LP to the object side surface of the second lens L2 on the optical axis when the optical lens 100 is in the short object distance state. When the relationship is satisfied, considering the assembly of the reflective element LP and the temperature drift of the optical lens 100, the distance between the light exit surface of the reflective element LP and the second lens group G2 at different object distances may be reasonably controlled to ensure a safe distance between the reflective element LP and the second lens group G2 and avoid interference. When the second lens group G2 is moved to correct the image quality performance at different object distances, the total height of the optical lens height 100 remains unchanged, thereby achieving internal focusing. At the same time, the amount of movement of the second lens group G2 from far to close focus reduces the movement stroke and ensures the amount of motor movement.

In some embodiments, the optical lens 100 satisfies the relationship of 2.7mm<Bz1<5mm. When the relationship is satisfied, there is sufficient space for movement between the reflective element LP and the object side surface of the second lens L2, thereby preventing interference between the reflective element LP and the second lens L2.

In some embodiments, the optical lens 100 satisfies the relationship of 0.8mm<Bz2<1.8mm. When the relationship is satisfied, there is sufficient space for movement between the reflective element LP and the object side surface of the second lens L2, thereby preventing interference between the reflective element LP and the second lens L2.

In some embodiments, the optical lens 100 satisfies the relationship of 1.7<CT_P/CT3<5.3. Wherein, CT_P is a length of the reflective element LP on the optical axis, and CT3 is a thickness of the third lens L3 on the optical axis. When the relationship is satisfied, the ratio of the length of the reflective element LP to the thickness of the third lens L3 is appropriate, thereby achieving the miniaturization of the optical system 100 and ensuring that the light has sufficient reflection path in the reflector LP.

The optical system 100 of the above embodiment swill be described as follows with detail parameters.

First embodiment

FIG. 1A, FIG. 1C, FIG. 2A, and FIG. 2C illustrate the optical lens 100 according to a first embodiment of the present disclosure. The optical lens 100 includes the stop STO, the first lens L1, the reflective element LP, the second lens L2, the third lens L3, the fourth lens L4, the fifth lens L5, and the filter IR, arranged in order from the object side to the image side along the optical axis. The first lens L1 forms a first lens group G1, and the second lens L2, third lens L3, fourth lens L4, and fifth lens L5 form a second lens group G2.

It is understood that FIG. 1C and FIG. 2C illustrate the optical path of optical lens 100 in the first embodiment. The optical path of the optical lens in other embodiments can be referred to the first embodiment. Therefore, the optical path of the optical lens in other embodiments is not shown.

It is understood that the reflective element LP may be a prism or a reflector. The embodiment and the following embodiments will be described using a prism as an example.

In the embodiment, the object side surface S1 of the first lens L1 is convex near the optical axis, and the image side surface S2 of the first lens L1 is flat near the optical axis. The object side surface S3 of the second lens L2 is convex near the optical axis, and the image side surface S2 of the second lens L2 is concave near the optical axis. The object side surface S5 of the third lens L3 is convex near the optical axis, and the image side surface S6 of the third lens L3 is concave near the optical axis. The object side surface S7 of the fourth lens L4 is concave near the optical axis, and the image side surface S8 of the fourth lens L4 is convex near the optical axis. The object side surface S9 of the fifth lens L5 is convex near the optical axis, and the image side surface S10 of the fifth lens L5 is concave near the optical axis.

The parameters of optical system 100 are shown in Table 1. The components sequentially arranged along the optical axis from the object side to the image side are arranged in Table 1 from top to bottom. For a same lens, the surface with a smaller surface numeral is the object side surface, and the surface with a larger surface numeral is the image side surface. For example, the surface numerals 1 and 2 correspond to the object side surface and the image side surface of the first lens L1, respectively. The Y-radius in Table 1 is the radius of curvature of the object side surface or the image side surface of the corresponding surface numeral on the optical axis. In the "thickness" column of each lens, the first value is the thickness of the lens on the optical axis, and the second value is the distance from the image side surface of the lens to the next surface on the optical axis. In the "thickness" column of the stop STO, the value is the distance from the stop STO to the vertex of the next surface (the vertex refers to the intersection between the surface and the optical axis) on the optical axis. The direction from the object side surface of the first lens L1 to the image side surface of the last lens is a positive direction of the optical axis. When the value in the "thickness" column of the stop STO is negative, the stop STO is indicated to be located on the image side of the vertex of the next surface. When the value in the "thickness" column of the stop STO is positive, the stop STO is indicated to be located on the object side of the vertex of the next surface. The units of Y-radius, thickness, and focal length in Table 1 are all in millimeters. The refractive index, Abbe number, etc. in Table 1 are obtained at a reference wavelength of 587.56 nm, and the focal length is obtained at a reference wavelength of 555 nm. Considering that the optical lens 100 of the present disclosure can achieve internal focusing, it has the long object distance state and the short object distance state. Therefore, the object distance A is different in the long object distance state and the short object distance state. At the same time, the air gap (i.e., B in Table 1 below) between the reflective element LP and the second lens L2 in the optical axis direction is different in the long object distance state and the short object distance state. As mentioned above, the filter IR can move along the optical axis with the second lens group G2. Therefore, the distance between the filter IR and the imaging surface IMG of the optical lens 100 (i.e., C in Table 1 below) is different in the long object distance state and the short object distance state.

Table 2 was compiled. Table 2 shows the values of A, B, C, f, FNO, FOV, TTL, and ImgH in both the long object distance state and the short object distance state. Except for FOV, which is in deg and FNO, which has no unit, the units of the other parameters in Table 2 are mm.

In addition, the surface numerals 1 and 2 in Tables 1 and 2 correspond to the object side surface S1 and image side surface S2 of the first lens L1, respectively. The surface numerals 3 and 4 correspond to the object side surface S3 and image side surface S4 of the second lens L2, respectively, and so forth. The surface numerals 9 and 10 correspond to the object side surface S9 and image side surface S10 of the fifth lens L5, respectively.

In the first embodiment, the object side surface of the first lens L1 is aspherical, and the image side surface of the first lens L1 may be spherical. The object side surface and image side surface of any one of the second lenses L2 to the fifth lens L5 are both aspherical. The surface shape *x* of aspherical surface may be expressed by, but not limited to, the following aspherical formula:

$$x = \frac{ch^2}{1 + \sqrt{1 - (k+1)c^2h^2}} + \sum Aih^i$$

Wherein, *x* is vector height from a point of the aspherical surface to the vertex of the aspherical surface along the optical axis, and the point has a height of h, c is a curvature of the aspherical surface on the optical axis, c=1/Y (i.e., the paraxial curvature c is the reciprocal of the Y-radius in Table 1), k is cone constant, and Ai is a coefficient corresponding to the $i^{th}$ higher-order term in the above aspherical formula. Table 3 shows the coefficients of high-order terms A4, A6, A8, A10, A12 that can be applied for the surface numerals 5-16 in the first embodiment.

As another example, the image side surface of the first lens can also be aspherical. The light incident surface and light exit surface of the reflective element LP can be spherical or aspherical. The embodiment is illustrated by taking the image side surface of the first lens as spherical and the light incident surface and light exit surface of the reflective element LP as spherical.

It is understood that the material of the first lens can be either plastic or glass. The material of the reflective element can also be either glass or plastic. The specific materials of the first lens and the reflective element are not limited in the embodiment.

Table 1

| Surface numeral | Surface name | Surface type | Y radius | thickness | Material | Refractive index | Abbe number | focal length |
|---|---|---|---|---|---|---|---|---|
| OBJ | Object side | spherical | infinity | A | | | | |
| STO | Stop | spherical | infinity | 0.544 | | | | |
| 1 | First lens | aspherical | 16.630 | 1.500 | plastic | 1.537 | 55.774 | 30.994 |
| 2 | | spherical | infinity | 0.500 | | | | |
| LP1 | Reflective element | spherical | infinity | 8.300 | Glass | 1.745 | 28.245 | |
| LP2 | | spherical | infinity | B | | | | |
| 3 | Second lens | aspherical | 5.338 | 0.600 | plastic | 1.667 | 20.374 | -16.535 |
| 4 | | aspherical | 3.435 | 0.121 | | | | |

(continued)

| First embodiment | | | | | | | | |
|---|---|---|---|---|---|---|---|---|
| Surface numeral | Surface name | Surface type | Y radius | thickness | Material | Refractive index | Abbe number | focal length |
| 5 | Third lens | aspherical | 4.504 | 4.600 | plastic | 1.546 | 55.932 | 14.084 |
| 6 | | aspherical | 6.951 | 1.806 | | | | |
| 7 | Fourth lens | aspherical | -14.935 | 1.089 | plastic | 1.667 | 20.374 | 27.836 |
| 8 | | aspherical | -8.516 | 0.482 | | | | |
| 9 | Fifth lens | aspherical | 5.487 | 1.111 | plastic | 1.546 | 55.932 | -53.598 |
| 10 | | aspherical | 4.290 | 0.500 | | | | |
| 11 | Filter | spherical | infinity | 0.210 | Glass | 1.518 | 64.166 | |
| 12 | | spherical | infinity | C | | | | |
| IMG | Imaging surface | spherical | infinity | 0.000 | | | | |

Table 2

| parameter | A | B | C | FNO | FOV | f | TTL | ImgH |
|---|---|---|---|---|---|---|---|---|
| Long object distance state | infinity | 4.516 | 4.665 | 2.52 | 22.6 | 21.57 | 30 | 4.36 |
| Short object distance state | 300.00 | 1.430 | 7.752 | 2.47 | 21.1 | 21.13 | 30 | 4.36 |

Table 3

| Aspherical coefficient in the first embodiment | | | | | |
|---|---|---|---|---|---|
| Surface numeral | A4 | A6 | A8 | A10 | A12 |
| 1 | -1.76867E-05 | -1.69419E-08 | 1.02283E-09 | -5.87401E-11 | 0.00000E+00 |
| 2 | 0.00000E+00 | 0.00000E+00 | 0.00000E+00 | 0.00000E+00 | 0.00000E+00 |
| 3 | -4.63421E-03 | 2.00284E-04 | -8.70332E-06 | 7.74160E-08 | 0.00000E+00 |
| 4 | -1.84917E-03 | -3.53375E-05 | -3.81538E-06 | 2.33330E-07 | 0.00000E+00 |
| 5 | 2.20597E-03 | -4.16177E-04 | 1.13214E-05 | 0.00000E+00 | 0.00000E+00 |
| 6 | 1.26539E-03 | -1.70289E-04 | 7.92936E-06 | 0.00000E+00 | 0.00000E+00 |
| 7 | 7.17815E-03 | -1.06276E-03 | 5.57056E-05 | -2.73796E-06 | 0.00000E+00 |
| 8 | 3.71400E-03 | -6.07188E-04 | 1.47343E-05 | 0.00000E+00 | 0.00000E+00 |
| 9 | -1.50053E-02 | 2.07845E-04 | 5.73224E-06 | 0.00000E+00 | 0.00000E+00 |
| 10 | -1.73318E-02 | 8.19447E-04 | -4.17208E-05 | 1.29801E-06 | -3.37797E-08 |

Referring to FIG. 1B and FIG. 2B, (A) of FIG. 1B and FIG. 2B show longitudinal spherical aberration diagrams of the optical lens 100 in the first embodiment at wavelengths of 435 nm, 470 nm, 510 nm, 555 nm, 610 nm, and 650 nm. In (A) of FIG. 1B and FIG. 2B, the horizontal axis along the X-axis represents the deviation of the focus point, and the vertical axis along the Y-axis represents the normalized field of view. From (A) of FIG. 1B and FIG. 2B, the spherical aberration data of the optical lens 100 in the first embodiment is better, indicating that the imaging quality of the optical lens 100 in the embodiment is good.

Referring to FIG. 1B and FIG. 2B, (B) of FIG. 1B and FIG. 2B show astigmatism diagrams of the optical system 100 in the first embodiment at a wavelength of 555 nm. The horizontal coordinate along the X-axis represents the deviation of the focus point. The vertical coordinate along the Y-axis represents the image heigh in mm. In the astigmatism diagram, T represents the curvature of the imaging surface 101 in the tangential direction, and S represents the curvature of the imaging surface 101 in the sagittal direction. From (B) of FIG. 1B and FIG. 2B, at this wavelength, the astigmatism of the optical system 10 has been compensated.

Referring to FIG. 1B and FIG. 2B, (C) of FIG. 1B and FIG. 2B show distortion diagrams of the optical system 100 in the first embodiment at a wavelength of 555 nm. The horizontal axis along the X-axis represents distortion, and the vertical axis along the Y-axis represents image height in mm. From (C) of FIG. 1B and FIG. 2B, at this wavelength, the distortion of the optical system 100 has been well corrected.

Second embodiment

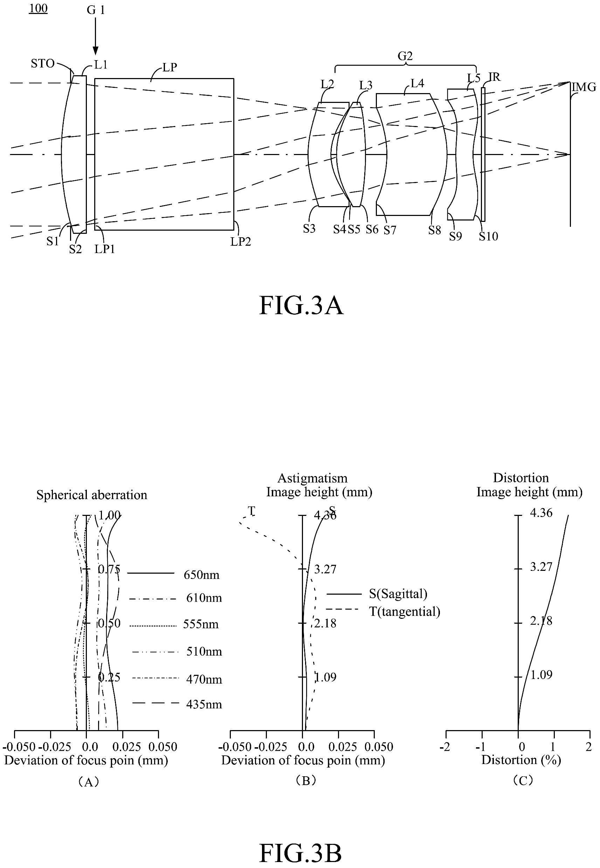

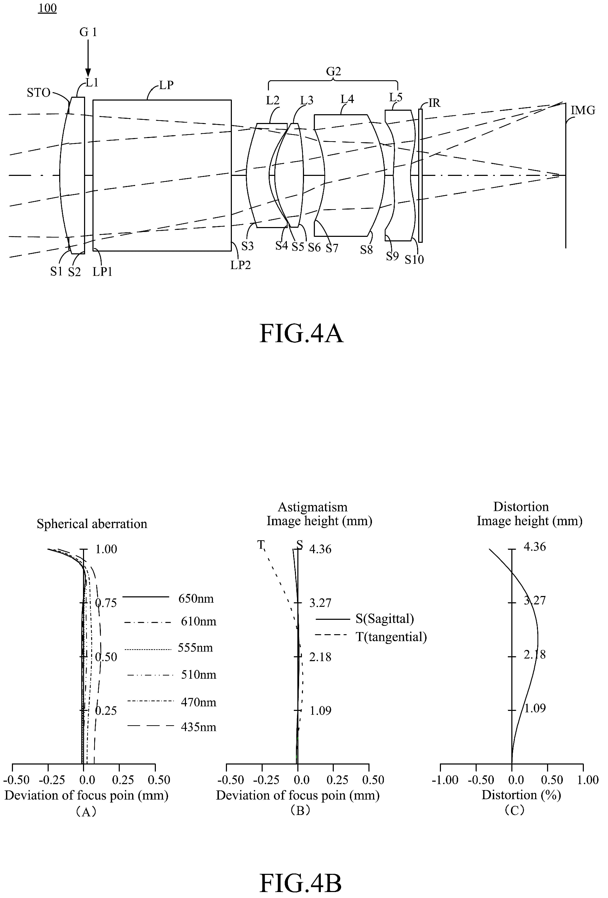

As shown in FIG. 3A and FIG. 4A, in the embodiment, the refractive power of the first lens L1 to the fifth lens L5 is the same as that of the first embodiment. In the first lens L1 to the fifth lens L5, except for the third lens L3 that has a convex image side surface near the optical axis, the surface shapes of the other lenses are the same as those of the first embodiment.

The parameters of optical system 100 are shown in Table 4. The definitions of each parameter are referred to the description of the previous embodiments, which will not be repeated here. Table 5 shows the values of each parameter of the optical lens in both the far-focus and short object distance states. Table 6 shows the high-order coefficients that can be applied for each aspherical lens in the second embodiment.

Table 4

| Surface numeral | Surface name | Surface type | Y radius | thickness | Material | Refractive index | Abbe number r | Focal length |
|---|---|---|---|---|---|---|---|---|
| | | | second embodiment | | | | | |
| OBJ | Object side | spherical | infinity | A | | | | |
| STO | Stop | spherical | infinity | 0.549 | | | | |
| 1 | First lens | aspheric al | 15.395 | 1.500 | plastic | 1.537 | 55.774 | 28.693 |
| 2 | | spherical | infinity | 0.500 | | | | |
| LP1 | Reflective element | spherical | infinity | 8.300 | Glass | 1.745 | 28.245 | |
| LP2 | | spherical | infinity | B | | | | |
| 3 | Second lens | aspheric al | 5.682 | 1.372 | plastic | 1.620 | 25.935 | 12.547 |
| 4 | | aspheric al | 2.979 | 0.336 | | | | |
| 5 | Third lens | aspheric al | 4.853 | 1.730 | plastic | 1.546 | 55.932 | 6.987 |
| 6 | | aspheric al | 15.602 | 1.280 | | | | |
| 7 | Fourth lens | aspheric al | -5.673 | 3.600 | plastic | 1.677 | 19.239 | 55.554 |
| 8 | | aspheric al | -6.192 | 0.528 | | | | |
| 9 | Fifth lens | aspheric al | 8.739 | 1.025 | plastic | 1.546 | 55.932 | 17.033 |
| 10 | | aspheric al | 4.319 | 0.500 | | | | |
| 11 | Filter | spherical | infinity | 0.210 | Glass | 1.518 | 64.166 | |
| 12 | | spherical | infinity | C | | | | |
| IMG | Imaging surface | spherical | infinity | 0.000 | | | | |

Table 5

| parameter | A | B | C | FNO | FOV | f | TTL | ImgH |
|---|---|---|---|---|---|---|---|---|
| Long object distance state | infinity | 4.423 | 5.095 | 2.52 | 22.5 | 21.57 | 30.4 | 4.36 |
| Short object distance state | 300.00 | 0.900 | 8.618 | 2.47 | 21.3 | 20.94 | 30.4 | 4.36 |

Table 6

| Aspherical coefficient in the second embodiment | | | | | |
|---|---|---|---|---|---|
| Surface numeral | A4 | A6 | A8 | A10 | A12 |
| 1 | -1.51529E-05 | -7.51802E-07 | 2.80255E-08 | -4.81439E-10 | 0.00000E+00 |
| 2 | 0.00000E+00 | 0.00000E+00 | 0.00000E+00 | 0.00000E+00 | 0.00000E+00 |
| 3 | -3.43649E-03 | 2.73022E-05 | 3.67523E-06 | -2.38681E-07 | 0.00000E+00 |
| 4 | -4.05496E-03 | 9.21936E-05 | -1.94280E-06 | 3.53876E-08 | 0.00000E+00 |
| 5 | -8.90137E-04 | 2.32623E-05 | -1.02776E-05 | 0.00000E+00 | 0.00000E+00 |
| 6 | 7.15222E-04 | 1.22002E-05 | -1.15748E-05 | 0.00000E+00 | 0.00000E+00 |
| 7 | 3.56513E-03 | -2.72267E-04 | 2.71745E-06 | 4.81623E-07 | 0.00000E+00 |
| 8 | 1.57986E-03 | -1.84474E-04 | 9.76321E-06 | 0.00000E+00 | 0.00000E+00 |
| 9 | -1.33431E-02 | 2.32760E-04 | 7.63697E-06 | 0.00000E+00 | 0.00000E+00 |
| 10 | -1.76069E-02 | 1.00407E-03 | -5.60137E-05 | 2.06091E-06 | -4.62663E-08 |
| | | | | | |

From (A) longitudinal spherical aberration diagrams of FIG. 3B and FIG. 4B, (B) astigmatism diagrams of FIG. 3B and FIG. 4B, and (C) distortion diagrams of FIG. 3B and FIG. 4B, the longitudinal spherical aberration, the astigmatism, and the distortion of the optical system 100 has been well controlled, thus the optical system 100 of the embodiment has good imaging quality. In addition, the wavelengths corresponding to the diagrams of (A), (B), and (C) of FIG. 3B and 4B are referred to the description of (A), (B), and (C) of FIG. 1B and FIG. 2B in the first embodiment, which will not be repeated here.

Third embodiment

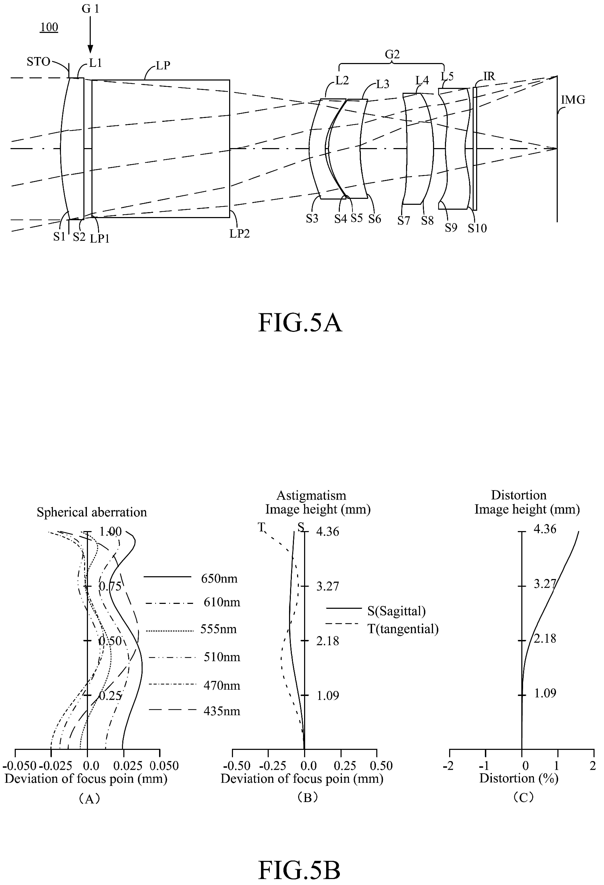

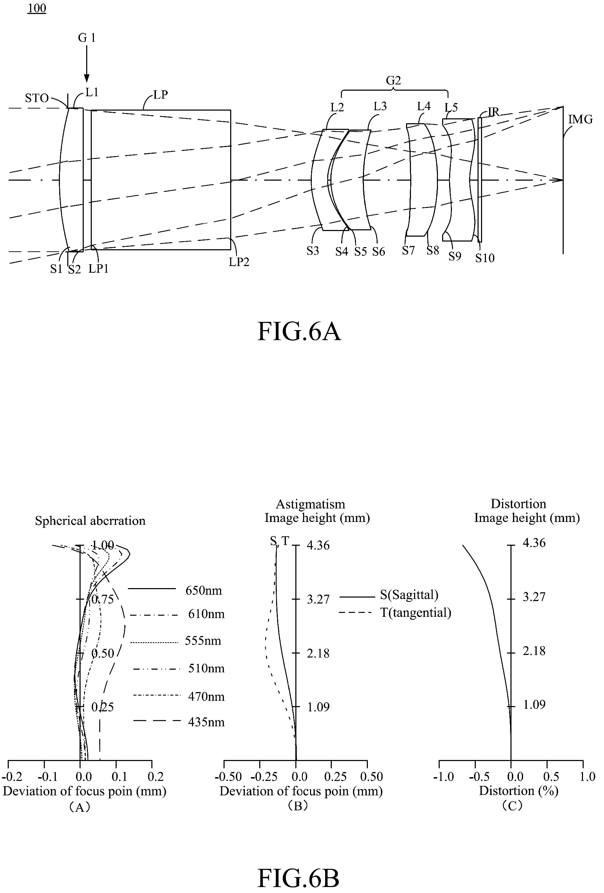

As shown in FIG. 5A and FIG. 6A, in the embodiment, the refractive power of the first lens L1 to the fifth lens L5 is the same as that of the first embodiment, and the surface shapes of the first lens L1 to the fifth lens L5 are the same as those of the first embodiment.

The parameters of optical system 100 are shown in Table 7. The definitions of each parameter are referred to the description of the previous embodiments, which will not be repeated here. Table 8 shows the values of each parameter of the optical lens in both the far-focus and short object distance states. Table 9 shows the high-order coefficients that can be applied for each aspherical lens in the third embodiment.

Table 7

| Third embodiment | | | | | | | | |
|---|---|---|---|---|---|---|---|---|
| Surfac e numer al | Surface name | Surface type | Y radius | thickne ss | Materi al | Refracti ve index | Abbe numb er | Focal length |
| OBJ | Object side | spherical | infinit y | A | | | | |
| STO | Stop | spherical | infinit y | 0.498 | | | | |
| 1 | First lens | aspherical | 16.256 | 1.400 | plastic | 1.537 | 55.77 4 | 30.29 7 |
| 2 | | spherical | infinit y | 0.500 | | | | |
| LP1 | Reflective element | spherical | infinit y | 8.300 | Glass | 1.745 | 28.24 5 | |
| LP2 | | spherical | infinit y | B | | | | |
| 3 | Second lens | aspherical | 4.810 | 0.979 | plastic | 1.667 | 20.37 4 | -12.77 4 |
| 4 | | aspherical | 2.823 | 0.195 | | | | |
| 5 | Third lens | aspherical | 3.993 | 1.926 | plastic | 1.546 | 55.93 2 | 11.04 4 |
| 6 | | aspherical | 9.804 | 2.823 | | | | |

(continued)

| Surface numeral | Surface name | Surface type | Y radius | thickness | Material | Refractive index | Abbe number | Focal length |
|---|---|---|---|---|---|---|---|---|
| | | | Third embodiment | | | | | |
| 7 | Fourth lens | aspherical | -21.575 | 1.595 | plastic | 1.667 | 20.374 | 21.517 |
| 8 | | aspherical | -8.870 | 0.714 | | | | |
| 9 | Fifth lens | aspherical | 6.655 | 1.200 | plastic | 1.546 | 55.932 | -26.040 |
| 10 | | aspherical | 4.245 | 0.500 | | | | |
| 11 | Filter | spherical | infinity | 0.210 | Glass | 1.518 | 64.166 | |
| 12 | | spherical | infinity | C | | | | |
| IMG | Imaging surface | spherical | infinity | 0.000 | | | | |

Table 8

| parameter | A | B | C | FNO | FOV | f | TTL | ImgH |
|---|---|---|---|---|---|---|---|---|
| Long object distance state | infinity | 4.800 | 4.858 | 2.52 | 22.5 | 21.57 | 30.4 | 4.36 |
| Short object distance state | 300.00 | 1.679 | 7.979 | 2.45 | 21.3 | twenty one | 30.4 | 4.36 |

Table 9

| Surface numeral | A4 | A6 | A8 | A10 | A12 |
|---|---|---|---|---|---|
| | Aspherical coefficient in the third embodiment | | | | |
| 1 | -5.80460E-05 | 5.98352E-06 | -3.12185E-07 | 5.84639E-09 | 0.00000E+00 |
| 2 | 0.00000E+00 | 0.00000E+00 | 0.00000E+00 | 0.00000E+00 | 0.00000E+00 |
| 3 | -4.15417E-03 | -9.74929E-05 | 1.41603E-05 | -6.63601E-07 | 0.00000E+00 |
| 4 | -2.52805E-03 | -1.78477E-04 | 1.34610E-05 | -8.65757E-07 | 0.00000E+00 |
| 5 | 1.24438E-05 | -1.63408E-04 | -9.65028E-06 | 0.00000E+00 | 0.00000E+00 |
| 6 | 1.22238E-04 | -1.24859E-05 | 3.99520E-07 | 0.00000E+00 | 0.00000E+00 |
| 7 | 4.09468E-03 | -5.88092E-04 | 2.96274E-05 | -1.63043E-06 | 0.00000E+00 |
| 8 | 2.02714E-03 | -3.59239E-04 | 7.57243E-06 | 0.00000E+00 | 0.00000E+00 |
| 9 | -1.38244E-02 | 1.80978E-04 | 7.60854E-06 | 0.00000E+00 | 0.00000E+00 |
| 10 | -1.75101E-02 | 9.95273E-04 | -6.00581E-05 | 2.48460E-06 | -6.51389E-08 |

From (A) longitudinal spherical aberration diagrams of FIG. 5B and FIG. 6B, (B) astigmatism diagrams of FIG. 5B and FIG. 6B, and (C) distortion diagrams of FIG. 5B and FIG. 6B, the longitudinal spherical aberration, the astigmatism, and the distortion of the optical system 100 has been well controlled, thus the optical system 100 of the embodiment has good imaging quality. In addition, the wavelengths corresponding to the diagrams of (A), (B), and (C) of FIG. 5B and 6B are referred to the description of (A), (B), and (C) of FIG. 1B and FIG. 2B in the first embodiment, which will not be repeated here.

Fourth embodiment

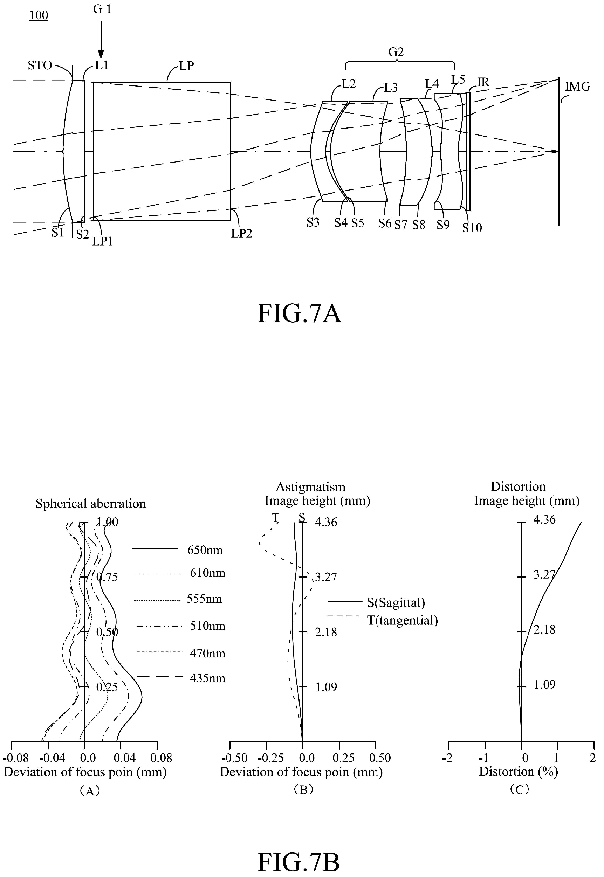

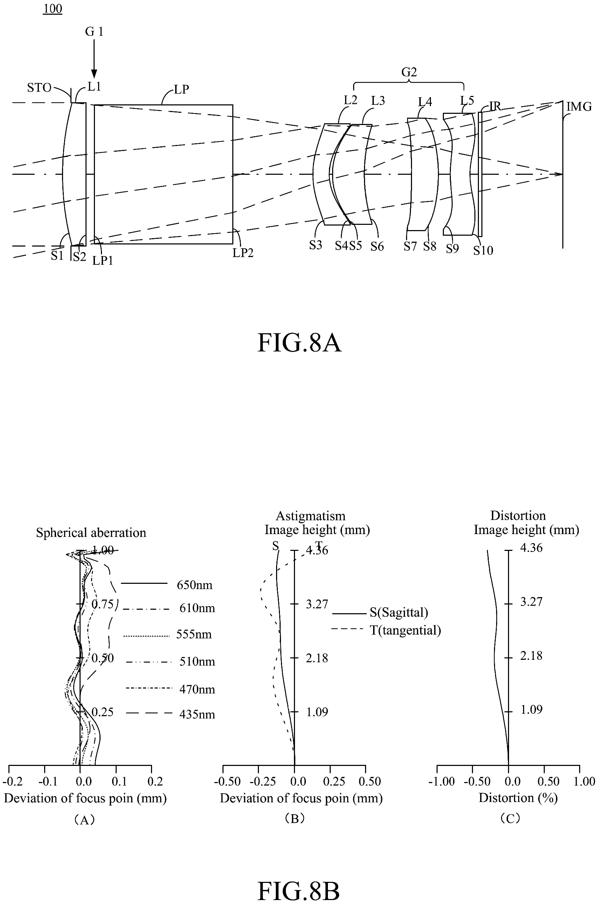

As shown in FIG. 7A and FIG. 8A, in the embodiment, the refractive power of the first lens L1 to the fifth lens L5 is the same as that of the first embodiment. In the first lens L1 to the fifth lens L5, except for the first lens L1 that has a concave image side surface near the optical axis, the surface shapes of the other lenses are the same as those of the first embodiment.

The parameters of optical system 100 are shown in Table 10. The definitions of each parameter are referred to the description of the previous embodiments, which will not be repeated here. Table 11 shows the values of each parameter of the optical lens in both the far-focus and short object distance states. Table 12 shows the high-order coefficients K, A4, A6, A8, A10, A12, A14, A16, A18, A20 that can be applied for each aspherical lens in the fourth embodiment.

Table 10

| Surface numeral | Surface name | Surface type | Y radius | thickness | Material | Refractive index | Abbe number r | focal length |
|---|---|---|---|---|---|---|---|---|
| | | | | Fourth embodiment | | | | |
| OBJ | Object side | spherical | infinity | A | | | | |
| STO | Stop | spherical | infinity | 0.571 | | | | |
| 1 | First lens | aspheric al | 15.533 | 1.341 | plastic | 1.537 | 55.774 | 29.450 |
| 2 | | spherical | 886.17 7 | 0.500 | | | | |
| LP1 | Reflective element | spherical | infinity | 8.300 | Glass | 1.745 | 28.245 | |
| LP2 | | spherical | infinity | B | | | | |
| 3 | Second lens | aspheric al | 4.705 | 0.899 | plastic | 1.667 | 20.374 | - 12.781 |
| 4 | | aspherical | 2.799 | 0.292 | | | | |
| 5 | Third lens | aspheric al | 4.106 | 3.000 | plastic | 1.546 | 55.932 | 11.186 |
| 6 | | aspheric al | 9.293 | 1.586 | | | | |
| 7 | Fourth lens | aspheric al | -12.207 | 1.554 | plastic | 1.667 | 20.374 | 17.596 |
| 8 | | aspheric al | -6.286 | 0.525 | | | | |
| 9 | Fifth lens | aspheric al | 7.074 | 1.048 | plastic | 1.546 | 55.932 | -22.151 |
| 10 | | aspheric al | 4.230 | 0.500 | | | | |
| 11 | Filter | spherical | infinity | 0.210 | Glass | 1.518 | 64.166 | |
| 12 | | spherical | infinity | C | | | | |
| IMG | Imaging surface | spherical | infinity | 0.000 | | | | |

Table 11

| parameter | A | B | C | FNO | FOV | f | TTL | ImgH |
|---|---|---|---|---|---|---|---|---|
| Long object distance state | infinity | 4.828 | 5.380 | 2.52 | 22.4 | 21.71 | 29.964 | 4.36 |
| Short object distance state | 300.00 | 1.428 | 8.780 | 2.63 | 21.2 | 21.14 | 29.964 | 4.36 |

Table 12

| Surface numeral | K | A4 | A6 | A8 | A10 |
|---|---|---|---|---|---|
| | | Aspherical coefficient in the fourth embodiment | | | |
| 1 | -5.67949E-02 | -6.09045E-05 | 7.76931E-06 | -6.43473E-07 | 2.55989E-08 |
| 2 | 0.00000E+00 | 0.00000E+00 | 0.00000E+00 | 0.00000E+00 | 0.00000E+00 |
| 3 | -4.85792E-02 | -5.64326E-03 | 1.54243E-03 | -9.76396E-04 | 3.75878E-04 |
| 4 | -9.98761E-01 | -4.10000E-03 | 1.54323E-03 | -9.09825E-04 | 3.53068E-04 |
| 5 | 4.07998E-02 | -5.20067E-04 | 2.90184E-04 | -1.49906E-04 | 2.24231E-05 |
| 6 | -2.67802E-01 | -2.17631E-03 | 2.91195E-03 | -2.02559E-03 | 7.58871E-04 |
| 7 | -4.12189E+00 | 3.58887E-03 | 1.30313E-03 | -1.47684E-03 | 5.11418E-04 |
| 8 | -5.02008E-01 | 3.52287E-03 | 5.96188E-04 | -9.77376E-04 | 3.26696E-04 |

(continued)

| Aspherical coefficient in the fourth embodiment | | | | |
|---|---|---|---|---|
| Surface numeral | K | A4 | A6 | A8 | A10 |
| 9 | 1.00069E-02 | -1.38396E-02 | 7.28427E-04 | -5.89566E-04 | 1.86608E-04 |
| 10 | 5.27652E-03 | -1.95545E-02 | 1.45839E-03 | -2.22460E-04 | 5.20677E-05 |
| Face number | A12 | A14 | A16 | A18 | A20 |
| 1 | -3.95235E-10 | 0.00000E+00 | 0.00000E+00 | 0.00000E+00 | 0.00000E+00 |
| 2 | 0.00000E+00 | 0.00000E+00 | 0.00000E+00 | 0.00000E+00 | 0.00000E+00 |
| 3 | -9.05389E-05 | 1.36165E-05 | -1.23852E-06 | 6.22555E-08 | -1.32737E-09 |
| 4 | -9.47055E-05 | 1.65784E-05 | -1.76348E-06 | 1.02381E-07 | -2.48658E-09 |
| 5 | -1.23938E-06 | 0.00000E+00 | 0.00000E+00 | 0.00000E+00 | 0.00000E+00 |
| 6 | -1.68217E-04 | 2.27223E-05 | -1.80880E-06 | 7.61523E-08 | -1.25954E-09 |
| 7 | -9.23410E-05 | 8.85139E-06 | -3.60819E-07 | -3.41637E-09 | 5.26791E-10 |
| 8 | -5.38752E-05 | 4.59912E-06 | -1.63932E-07 | -1.47980E-09 | 1.87416E-10 |
| 9 | -1.89912E-05 | -1.33717E-06 | 4.61037E-07 | -3.76634E-08 | 1.06635E-09 |
| 10 | -8.40203E-06 | 7.22147E-07 | -2.74427E-08 | 2.39921E-11 | 1.84259E-11 |

From (A) longitudinal spherical aberration diagrams of FIG. 7B and FIG. 8B, (B) astigmatism diagrams of FIG. 7B and FIG. 8B, and (C) distortion diagrams of FIG. 7B and FIG. 8B, the longitudinal spherical aberration, the astigmatism, and the distortion of the optical system 100 has been well controlled, thus the optical system 100 of the embodiment has good imaging quality. In addition, the wavelengths corresponding to the diagrams of (A), (B), and (C) of FIG. 7B and FIG. 8B are referred to the description of (A), (B), and (C) of FIG. 1B and FIG. 2B in the first embodiment, which will not be repeated here.

Fifth embodiment

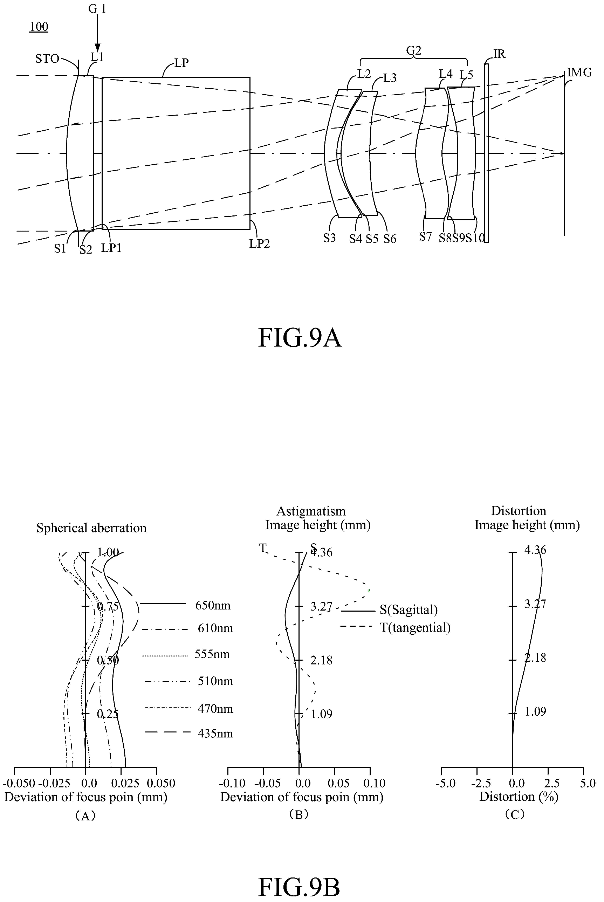

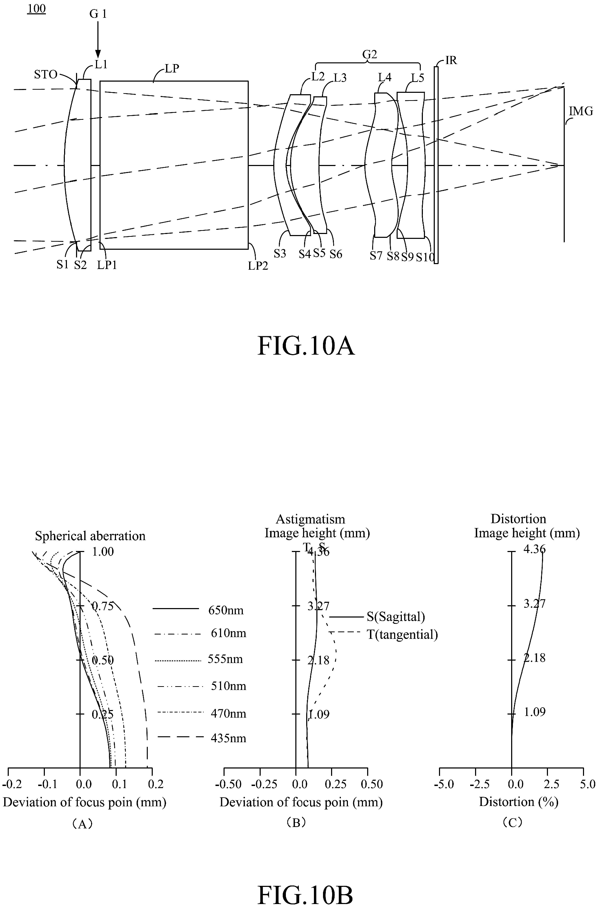

As shown in FIG. 9A and FIG. 10A, in the embodiment, the refractive power of the first lens L1 to the third lens L3 is the same as that of the first embodiment, but the fourth lens L4 has negative refractive power and the fifth lens L5 has positive refractive power. The surface shapes of the first lens L1 to the third lens L3 are also the same as those of the first embodiment. The object side of the fourth lens L4 is convex near the optical axis, and the image side surface of the fourth lens L4 is concave near the optical axis. The object side of the fifth lens L5 is concave near the optical axis, and the image side surface of the fifth lens L5 is convex near the optical axis.

The parameters of optical system 100 are shown in Table 13. The definitions of each parameter are referred to the description of the previous embodiments, which will not be repeated here. Table 14 shows the values of each parameter of the optical lens in both the far-focus and short object distance states. Table 15 shows the high-order coefficients K, A4, A6, A8, A10, A12 that can be applied for each aspherical lens in the fifth embodiment.

Table 13

| Fifth embodiment | | | | | | | | |
|---|---|---|---|---|---|---|---|---|
| Surface numeral | Surface name | Surface type | Y radius | thickness | Material | Refractive index | Abbe numbe r | focal length |
| OBJ | Object side | spherical | infinity | A | | | | |
| STO | Stop | spherical | infinity | 0.685 | | | | |
| 1 | First lens | aspheric al | 14.282 | 1.500 | plastic | 1.537 | 55.77 4 | 26.617 |
| 2 | | spherical | infinity | 0.500 | | | | |

(continued)

| Surface numeral | Surface name | Surface type | Y radius | thickness | Material | Refractive index | Abbe numbe r | focal length |
|---|---|---|---|---|---|---|---|---|
| LP1 | Reflective element | spherical | infinity | 8.300 | Glass | 1.745 | 28.24 5 | |
| LP2 | | spherical | infinity | B | | | | |
| 3 | Second lens | aspheric al | 5.263 | 0.700 | plastic | 1.667 | 20.37 4 | -12.917 |
| 4 | | aspheric al | 3.093 | 0.237 | | | | |
| 5 | Third lens | aspheric al | 4.951 | 1.616 | plastic | 1.546 | 55.93 2 | 12.603 |
| 6 | | aspheric al | 15.615 | 2.566 | | | | |
| 7 | Fourth lens | aspheric al | 4.099 | 1.500 | plastic | 1.667 | 20.37 4 | -1259.5 2 |
| 8 | | aspheric al | 3.482 | 0.885 | | | | |
| 9 | Fifth lens | aspheric al | -29.246 | 1.000 | plastic | 1.546 | 55.93 2 | 40.256 |
| 10 | | aspheric al | -12.701 | 0.500 | | | | |
| 11 | Filter | spherical | infinity | 0.210 | Glass | 1.518 | 64.16 6 | |
| 12 | | spherical | infinity | C | | | | |
| IMG | Imaging surface | spherical | infinity | 0.000 | | | | |

Table 14

| parameter | A | B | C | FN O | FOV | f | TT L | Img H |
|---|---|---|---|---|---|---|---|---|
| Long object distance state | infinit y | 4.19 6 | 4.29 0 | 2.3 | 24.2 | 20 | 28 | 4.36 |
| Short object distance state | 300.00 | 1.43 0 | 7.05 6 | 2.27 | twenty three | 19.3 8 | 28 | 4.36 |

Table 15

| Surface numeral | K | A4 | A6 | A8 | A10 | A12 |
|---|---|---|---|---|---|---|
| Aspherical coefficient in the fifth embodiment | | | | | | |
| 1 | -1.04576E+0 0 | 9.15141E-06 | -2.61030E-06 | 1.51309E-07 | -3.10586E-09 | 0.00000E+0 0 |
| 2 | 0.00000E+0 0 | 0.00000E+0 0 | 0.00000E+0 0 | 0.00000E+0 0 | 0.00000E+0 0 | 0.00000E+0 0 |
| 3 | -2.64382E-02 | -5.50878E-03 | 4.35113E-05 | 2.01750E-05 | -9.24778E-07 | 0.00000E+0 0 |
| 4 | -1.09212E+0 0 | -6.77790E-03 | 3.94551E-04 | 4.72313E-06 | -1.25788E-06 | 0.00000E+0 0 |
| 5 | -9.87926E-02 | -3.52617E-03 | 7.28491E-04 | -4.27844E-05 | 0.00000E+0 0 | 0.00000E+0 0 |
| 6 | 1.70948E+0 1 | -4.46575E-03 | 8.36837E-04 | -4.49586E-05 | 0.00000E+0 0 | 0.00000E+0 0 |
| 7 | -3.08077E+0 0 | -7.85539E-03 | 9.62263E-04 | -6.29032E-05 | 7.30455E-07 | 0.00000E+0 0 |
| 8 | -7.20161E+0 0 | -8.42424E-03 | 5.74739E-04 | -2.40152E-05 | 0.00000E+0 0 | 0.00000E+0 0 |
| 9 | 4.36173E+0 1 | -1.24287E-02 | 1.49536E-03 | -5.15639E-05 | 0.00000E+0 0 | 0.00000E+0 0 |
| 10 | -1.84922E+0 1 | -2.61766E-03 | 7.85914E-04 | -3.13058E-05 | -5.31337E-07 | 2.84885E-08 |

From (A) longitudinal spherical aberration diagrams of FIG. 9B and FIG. 10B, (B) astigmatism diagrams of FIG. 9B and FIG. 10B, and (C) distortion diagrams of FIG. 9B and FIG. 10B, the longitudinal spherical aberration, the astigmatism, and the distortion of the optical system 100 has been well controlled, thus the optical system 100 of the embodiment has good imaging quality. In addition, the wavelengths corresponding to the diagrams of (A), (B), and (C) of FIG. 9B and FIG. 10B are referred to the description of (A), (B), and (C) of FIG. 1B and FIG. 2B in the first embodiment, which will not be repeated here.

Sixth embodiment

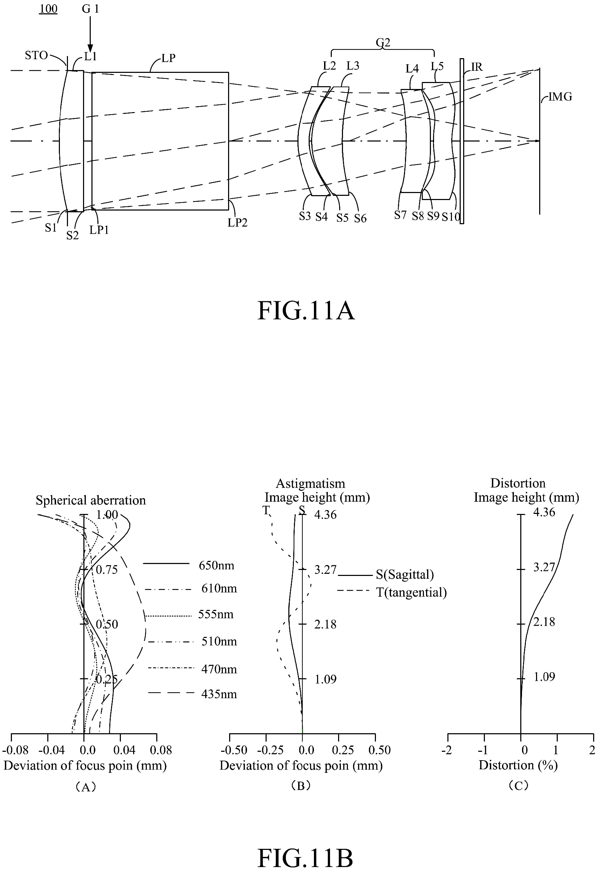

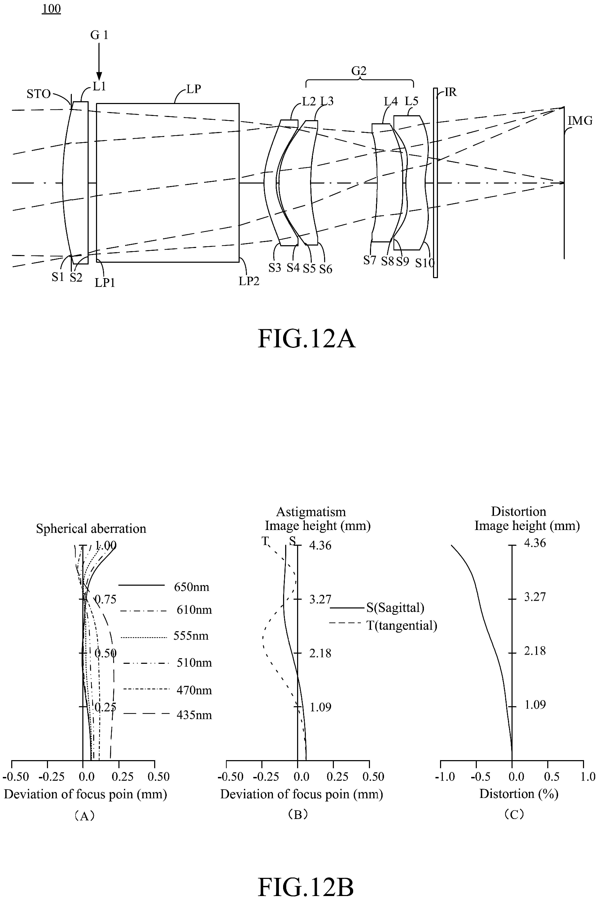

As shown in FIG. 11A and FIG. 12A, in the embodiment, the refractive power of the first lens L1 to the fifth lens L5 is the same as that of the fifth embodiment, and the surface shapes of the first lens L1 to the fifth lens L5 are also the same as those of the fifth embodiment.

The parameters of optical system 100 are shown in Table 16. The definitions of each parameter are referred to the description of the previous embodiments, which will not be repeated here. Table 17 shows the values of each parameter of the optical lens in both the far-focus and short object distance states. Table 18 shows the high-order coefficients K, A4, A6, A8, A10, A12 that can be applied for each aspherical lens in the sixth embodiment.

Table 16

| Surface numeral | Surface name | Surface type | Y radius | thickness | Material | Refractive index | Abbe number r | focal length |
|---|---|---|---|---|---|---|---|---|
| | | | | Sixth embodiment | | | | |
| OBJ | Object side | spherical | infinity | A | | | | |
| STO | Stop | spherical | infinity | 0.512 | | | | |
| 1 | First lens | aspheric al | 17.574 | 1.500 | plastic | 1.537 | 55.774 | 32.754 |
| 2 | | spherical | infinity | 0.500 | | | | |
| LP1 | Reflective element | spherical | infinity | 8.300 | Glass | 1.745 | 28.245 | |
| LP2 | | spherical | infinity | B | | | | |
| 3 | Second lens | aspheric al | 4.509 | 0.700 | plastic | 1.667 | 20.374 | -21.164 |
| 4 | | aspheric al | 3.205 | 0.162 | | | | |
| 5 | Third lens | aspheric al | 4.656 | 1.851 | plastic | 1.546 | 55.932 | 12.453 |
| 6 | | aspheric al | 12.695 | 3.869 | | | | |
| 7 | Fourth lens | aspheric al | -13.834 | 1.500 | plastic | 1.667 | 20.374 | -37.615 |
| 8 | | aspheric al | - 32.203 | 0.170 | | | | |
| 9 | Fifth lens | aspheric al | 4.519 | 1.119 | plastic | 1.546 | 55.932 | 263.21 6 |
| 10 | | aspheric al | 4.257 | 0.500 | | | | |
| 11 | Filter | spherical | infinity | 0.210 | Glass | 1.518 | 64.166 | |
| 12 | | spherical | infinity | C | | | | |
| IMG | Imaging surface | spherical | infinity | 0.000 | | | | |

Table 17

| parameter | A | B | C | FNO | FOV | f | TTL | ImgH |
|---|---|---|---|---|---|---|---|---|
| Long object distance state | infinity | 4.204 | 4.615 | 2.57 | 22.5 | 21.57 | 29.2 | 4.36 |
| Short object distance state | 300.00 | 1.430 | 7.389 | 2.27 | 20.9 | 21.23 | 29.2 | 4.36 |

Table 18

| Surface numeral | K | A4 | A6 | A8 | A10 | A12 |
|---|---|---|---|---|---|---|
| | | | Aspherical coefficient in the sixth embodiment | | | |
| 1 | -8.48275E-02 | -5.79262E-05 | 6.34806E-06 | -3.74067E-07 | 7.66861E-09 | 0.00000E+0 0 |

(continued)

| Surface numeral | K | A4 | A6 | A8 | A10 | A12 |
|---|---|---|---|---|---|---|
| | | | Aspherical coefficient in the sixth embodiment | | | |
| 2 | 0.00000E+0 0 | 0.00000E+0 0 | 0.00000E+0 0 | 0.00000E+0 0 | 0.00000E+0 0 | 0.00000E+0 0 |
| 3 | -1.42886E-01 | -5.52230E-03 | 1.38731E-04 | 7.93415E-07 | -4.11972E-07 | 0.00000E+0 0 |
| 4 | -9.76644E-01 | -2.81904E-03 | 2.70285E-05 | -7.99358E-06 | 1.18724E-07 | 0.00000E+0 0 |
| 5 | 1.48762E-01 | 3.40438E-03 | -4.10345E-04 | 3.25753E-06 | 0.00000E+0 0 | 0.00000E+0 0 |
| 6 | 2.61909E+0 0 | 9.68139E-04 | -8.94197E-05 | -2.30316E-06 | 0.00000E+0 0 | 0.00000E+0 0 |
| 7 | -9.90000E+0 1 | 3.08254E-03 | -1.29964E-03 | 1.59115E-04 | -8.72890E-06 | 0.00000E+0 0 |
| 8 | 9.13123E+0 1 | -9.53256E-03 | 5.93217E-04 | -1.83001E-06 | 0.00000E+0 0 | 0.00000E+0 0 |
| 9 | -3.21405E+0 0 | -3.68097E-02 | 2.73042E-03 | -6.86156E-05 | 0.00000E+0 0 | 0.00000E+0 0 |
| 10 | 7.51381E-02 | -2.80722E-02 | 2.74153E-03 | -2.12398E-04 | 9.87392E-06 | -2.31632E-07 |

From (A) longitudinal spherical aberration diagrams of FIG. 11B and FIG. 12B, (B) astigmatism diagrams of FIG. 11B and FIG. 12B, and (C) distortion diagrams of FIG. 11B and FIG. 12B, the longitudinal spherical aberration, the astigmatism, and the distortion of the optical system 100 has been well controlled, thus the optical system 100 of the embodiment has good imaging quality. In addition, the wavelengths corresponding to the diagrams of (A), (B), and (C) of FIG. 11B and FIG. 12B. 10B are referred to the description of (A), (B), and (C) of FIG. 1B and FIG. 2B in the first embodiment, which will not be repeated here.

Seventh embodiment

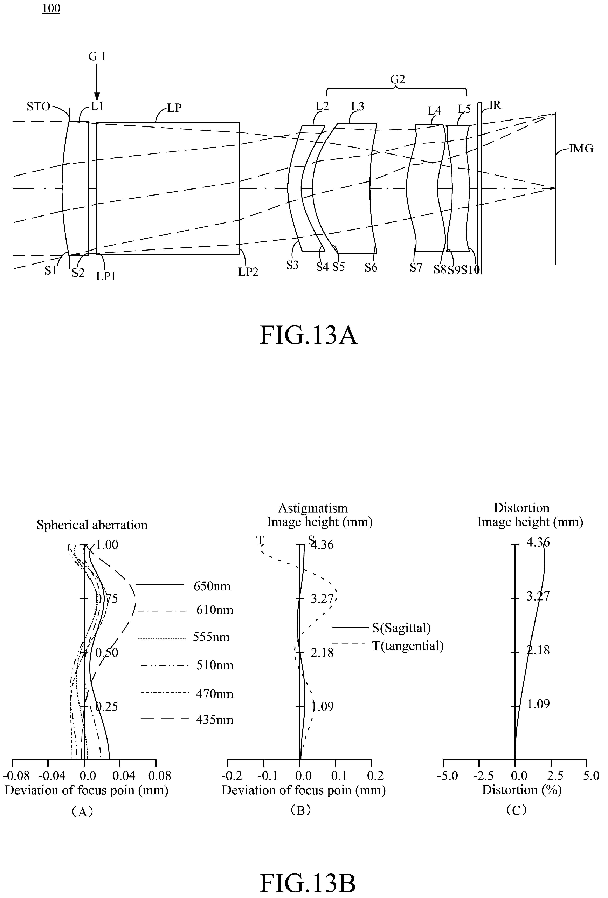

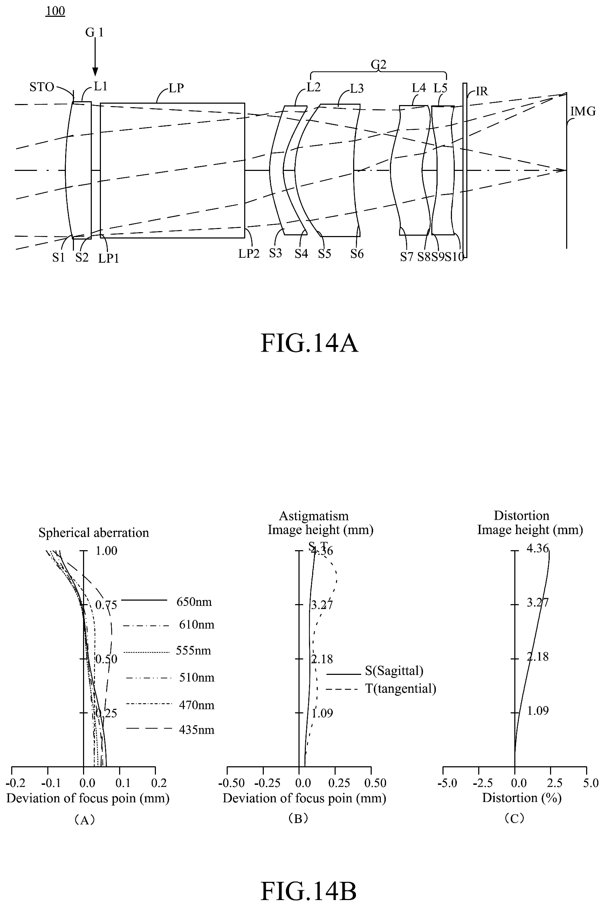

As shown in FIG. 13A and FIG. 14A, in the embodiment, the refractive power of the first lens L1 to the fifth lens L5 is the same as that of the fifth embodiment, and the surface shapes of the first lens L1 to the fifth lens L5 are also the same as those of the fifth embodiment.

The parameters of optical system 100 are shown in Table 19. The definitions of each parameter are referred to the description of the previous embodiments, which will not be repeated here. Table 20 shows the values of each parameter of the optical lens in both the far-focus and short object distance states. Table 21 shows the high-order coefficients K, A4, A6, A8, A10, A12 that can be applied for each aspherical lens in the seventh embodiment.

Table 19

| Surface numeral | Surface name | Surface type | Y radius | thickness | Material | Refractive index | Abbe number | focal length |
|---|---|---|---|---|---|---|---|---|
| | | | Seventh embodiment | | | | | |
| OBJ | surface | spherical | infinity | A | | | | |
| STO | aperture | spherical | infinity | 0.454 | | | | |
| 1 | First lens | aspherical | 18.365 | 1.500 | plastic | 1.537 | 55.774 | 34.228 |
| 2 | | spherical | infinity | 0.500 | | | | |
| LP1 | Reflective element | spherical | infinity | 8.300 | Glass | 1.745 | 28.245 | |
| LP2 | | spherical | infinity | B | | | | |
| 3 | Second lens | aspherical | 5.183 | 0.789 | plastic | 1.667 | 20.374 | -16.098 |
| 4 | | aspherical | 3.282 | 0.663 | | | | |
| 5 | Third lens | aspherical | 5.113 | 3.358 | plastic | 1.546 | 55.932 | 12.081 |
| 6 | | aspherical | 17.450 | 2.115 | | | | |
| 7 | Fourth lens | aspherical | 4.516 | 1.817 | plastic | 1.667 | 20.374 | -367.697 |
| 8 | | aspherical | 3.721 | 0.866 | | | | |

(continued)

| Seventh embodiment | | | | | | | | |
|---|---|---|---|---|---|---|---|---|
| Surface numeral | Surface name | Surface type | Y radius | thickness | Material | Refractive index | Abbe number | focal length |
| 9 | Fifth lens | aspherical | -29.246 | 1.000 | plastic | 1.546 | 55.932 | 38.729 |
| 10 | | aspherical | -12.422 | 0.500 | | | | |
| 11 | Filter | spherical | infinity | 0.210 | Glass | 1.518 | 64.16 | |
| | | | | | | | 6 | |
| 12 | | spherical | infinity | C | | | | |
| IMG | Imaging surface | spherical | infinity | 0.000 | | | | |

Table 20

| parameter | A | B | C | FNO | FOV | f | TTL | ImgH |
|---|---|---|---|---|---|---|---|---|
| Long object distance state | infinity | 2.862 | 4.300 | 2.3 | 26.7 | 18 | 28.78 | 4.36 |
| Short object distance state | 300.00 | 1.430 | 5.732 | 2.3 | 25.7 | 17.57 | 28.78 | 4.36 |

Table 21

| Aspherical coefficient in the seventh embodiment | | | | | | |
|---|---|---|---|---|---|---|
| Surface numeral | K | A4 | A6 | A8 | A10 | A12 |
| 1 | -1.52850E+00 | 1.90641E-06 | -6.10020E-06 | 3.98931E-07 | -9.58753E-09 | 0.00000E+00 |
| 2 | 0.00000E+00 | 0.00000E+00 | 0.00000E+00 | 0.00000E+00 | 0.00000E+00 | 0.00000E+00 |
| 3 | -4.95416E-02 | -5.36954E-03 | 1.68603E-04 | -1.91061E-06 | -6.85602E-08 | 0.00000E+00 |
| 4 | -1.08516E+00 | -5.99974E-03 | 3.38707E-04 | -1.28622E-05 | 2.04577E-07 | 0.00000E+00 |
| 5 | -6.08250E-02 | -9.04977E-04 | 9.57611E-05 | -6.63863E-06 | 0.00000E+00 | 0.00000E+00 |
| 6 | 1.79511E+01 | -2.59942E-03 | 4.34623E-04 | -2.29234E-05 | 0.00000E+00 | 0.00000E+00 |
| 7 | -2.88390E+00 | -5.68840E-03 | 4.82729E-04 | -2.37267E-05 | -3.59383E-07 | 0.00000E+00 |
| 8 | 5.24226E+00 | -7.05693E-03 | 4.54947E-04 | -1.83367E-05 | 0.00000E+00 | 0.00000E+00 |
| 9 | -6.82201E+01 | -1.00873E-02 | 1.28352E-03 | -4.35688E-05 | 0.00000E+00 | 0.00000E+00 |
| 10 | - 1.53102E+01 | -2.97290E-03 | 8.91627E-04 | -4.60168E-05 | 8.32118E-07 | -9.89136E-09 |

From (A) longitudinal spherical aberration diagrams of FIG. 13B and FIG. 14B, (B) astigmatism diagrams of FIG. 13B and FIG. 14B, and (C) distortion diagrams of FIG. 13B and FIG. 14B, the longitudinal spherical aberration, the astigmatism, and the distortion of the optical system 100 has been well controlled, thus the optical system 100 of the embodiment has good imaging quality. In addition, the wavelengths corresponding to the diagrams of (A), (B), and (C) of FIG. 13B and FIG. 14B, are referred to the description of (A), (B), and (C) of FIG. 1B and FIG. 2B in the first embodiment, which will not be repeated here.

Table 22 shows ratios of various relationships in the first to seventh embodiments of the present disclosure.

Table 22

| Relationship | First embodiment | Second embodiment | Third embodiment | Fourth embodiment | Fifth embodiment | Sixth embodiment | Seventh embodiment |
|---|---|---|---|---|---|---|---|
| f1/fi | 1.437 | 1.33 | 1.405 | 1.357 | 1.331 | 1.518 | 1.902 |
| f2/fi | -0.767 | -0.582 | -0.592 | -0.589 | -0.646 | -0.981 | -0.894 |
| f3/fi | 0.653 | 0.324 | 0.512 | 0.515 | 0.63 | 0.577 | 0.671 |
| |f4|/fi | 1.29 | 2.576 | 0.998 | 0.81 | 62,976 | 1.744 | 20,428 |
| f5/fi | 2.485 | 0.79 | 1.207 | 1.02 | 2.013 | 12.203 | 2.152 |
| fi/R1 | 1.297 | 1.401 | 1.327 | 1.398 | 1.4 | 1.227 | 0.98 |
| fi/R3 | 4.04 | 3.796 | 4.484 | 4.614 | 3.8 | 4.784 | 3.473 |
| fi/R4 | 6.28 | 7.239 | 7.639 | 7.755 | 6.467 | 6.731 | 5.484 |
| fi/R5 | 4.789 | 4.445 | 5.402 | 5.288 | 4.039 | 4.632 | 3.521 |
| fi/|R6| | 3.103 | 1.383 | 2.2 | 2.336 | 1.281 | 1.699 | 1.032 |
| fi/|R7| | 1.444 | 3.802 | 1 | 1.779 | 4.879 | 1.559 | 3.986 |
| fi/|R8| | 2.533 | 3.483 | 2.432 | 3.454 | 5.744 | 0.67 | 4.837 |
| fi/|R9| | 3.931 | 2.468 | 3.241 | 3.069 | 0.684 | 4.773 | 0.615 |
| fi/|R10| | 5.028 | 4.994 | 5.082 | 5.132 | 1.575 | 5.066 | 1.449 |
| TTL/ImgH | 6.881 | 6.972 | 6.972 | 6.872 | 6.422 | 6.697 | 6.601 |
| Bz1-Bz2 (mm) | 3.086 | 3.523 | 3.121 | 3.4 | 2.766 | 2.774 | 1.432 |
| Bz1 (mm) | 4.516 | 4.423 | 4.8 | 4.828 | 4.196 | 4.204 | 2.862 |
| Bz2 (mm) | 1.43 | 0.9 | 1.679 | 1.428 | 1.43 | 1.43 | 1.43 |
| CT3/CT2 | 7.667 | 1.261 | 1.968 | 3.336 | 2.309 | 2.644 | 4.258 |
| CT4/CT5 | 0.981 | 3.512 | 1.33 | 1.483 | 1.5 | 1.34 | 1.817 |
| SD3/SD1 | 0.699 | 0.664 | 0.706 | 0.702 | 0.82 | 0.772 | 0.938 |
| fG2/fi | 4.749 | 4.112 | 3.831 | 4.26 | 3.266 | 5.272 | 1.697 |
| 43.27×f/ (2×ImgH×23) | 4.654 | 4.654 | 4.654 | 4.684 | 4.315 | 4.654 | 3.883 |
| ΣCT/CT23 | 1.712 | 2.974 | 2.445 | 2.011 | 2.727 | 2.615 | 2.041 |
| ΣCT/CT45 | 4.046 | 1.995 | 2.54 | 3.014 | 2.527 | 2.547 | 3.005 |
| CT2/SAG21 | 0.94 | 2.506 | 1.459 | 1.239 | 1.031 | 0.922 | 1.121 |

(continued)

| Relationship | First embodiment | Second embodiment | Third embodiment | Fourth embodiment | Fifth embodiment | Sixth embodiment | Seventh embodiment |
|---|---|---|---|---|---|---|---|
| CT2/SAG22 | 0.553 | 1.27 | 0.814 | 0.7 | 0.575 | 0.619 | 0.682 |
| CT1/CT2 | 2.5 | 1.093 | 1.431 | 1.491 | 2.143 | 2.143 | 1.902 |
| CT3/(CT1+CT2+CT4+CT5) | 1.07 | 0.231 | 0.372 | 0.62 | 0.344 | 0.384 | 0.658 |
| CT3/CT4 | 4.223 | 0.481 | 1.207 | 1.931 | 1.078 | 1.234 | 1.848 |
| fi/BL1 | 4.013 | 3.716 | 3.874 | 3.565 | 4 | 4.05 | 3.593 |
| CT_P/CT3 | 1.804 | 4.797 | 4.31 | 2.767 | 5.135 | 4.484 | 2.471 |

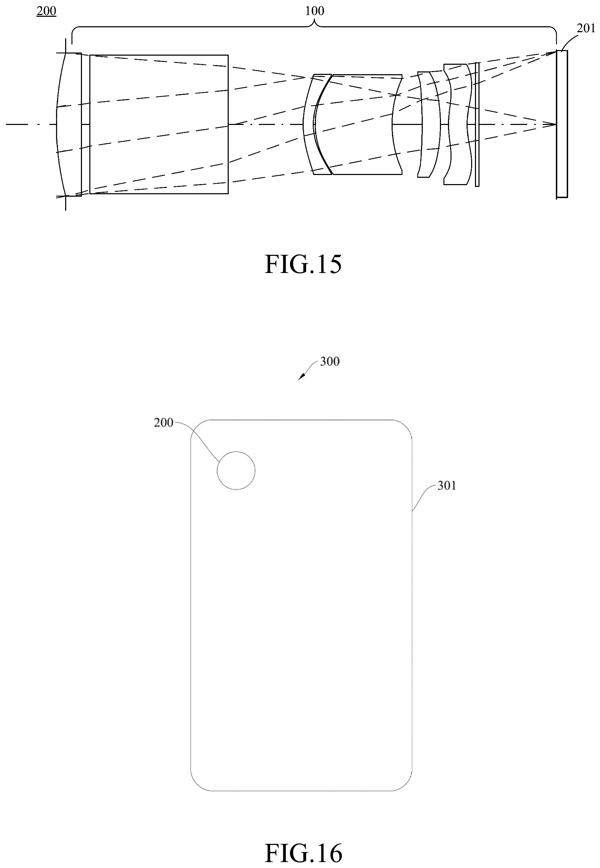

Referring to Figure 15, the present disclosure further provides a camera module 200. The camera module 200 includes an image sensor 201 and the optical lens 100 as described in any one of the first to eighth embodiments of the first aspect. The image sensor 201 is located on the image side of the optical lens 100. The optical lens 100 can receive light signal from the subject and project the light signal onto the image sensor 201, and the image sensor 201 may convert the light signal corresponding to the subject into an image signal, which will not be elaborated here. The camera module 200 with the optical lens 100 mentioned above has all the technical effects of the optical lens 100, and may achieve miniaturization and thinness and have a large image surface. The advantages have been described in the embodiments of the optical system 100, which will not be repeated here.

Referring to FIG.16, the present disclosure further provides an electronic device 300. The electronic device 300 includes a housing 301 and the camera module 200 mentioned above, and the camera module 200 is located on the housing. The camera module 200 may be installed in or on the housing 301. The electronic device 300 may be, but is not limited to a mobile phone, a tablet computer, a laptop, a smartwatch, or a monitor. The electronic device 300 with the camera module 200 may have the advantages of the optical system 100. That is, the electronic device 300 may achieve miniaturization and thinness and have a large image surface, which is beneficial for improving image quality. The advantages have been described in the embodiments of the optical system 100, which will not be repeated here.

The optical lens, camera module and electronic device disclosed in the embodiments of the present disclosure have been introduced in detail above. Specific examples are used to illustrate the principles and implementation methods of the present disclosure. The description of the above embodiments is only used to help understand the optical lens, camera module and electronic device of the present disclosure and its core idea; at the same time, for those of ordinary skill in the field, there will be changes in the specific implementation and application scope based on the ideas of the present disclosure. In summary, the content of this description should not be understood as a limitation of the present disclosure.

### Claims

1.  An optical lens (100), **characterized by**, comprising a total of five lenses with refractive power, in order from an object side to an image side along an optical axis, comprising:

    a first lens group (G1) comprising a first lens (L1) having positive refractive power, wherein an object side surface (S1) of the first lens (L1) is convex near the optical axis;
    a second lens group (G2) comprising, in order from the object side to the image side along the optical axis, a second lens (L2) having negative refractive power, a third lens (L3) having positive refractive power, a fourth lens (L4) having refractive power, and a fifth lens (L5) having refractive power, wherein an object side surface (S3) of the second lens (L2) is convex near the optical axis, an image side surface (S4) of the second lens (L2) is concave near the optical axis, and an object side surface (S5) of the third lens (L3) is convex near the optical axis;
    wherein the first lens group (G1) is fixed relative to an imaging surface (IMG) of the optical lens (100), and the second lens group (G2) is movable between the first lens group (G1) and the imaging surface (IMG) along the optical axis;
    the optical lens (100) satisfies following relationships:

    18deg<FOV<28deg, and 2.1<FNO<2.8;
    wherein FOV is a maximum field of view of the optical lens (100), and FNO is an aperture number of the optical lens (100).

2.  The optical lens (100) according to claim 1, wherein the optical lens (100) further satisfies at least one of following relationships:

$$1.2 < f1/fi < 2,$$

$$-1.1 < f2/fi < -0.5,$$

$$0.3 < f3/fi < 0.7,$$

$$0.75 < |f4|/fi,$$

$$0.7 < f5/fi,$$

and

$$1.6 < fG2/fi < 5.4;$$

wherein f1 is a focal length of the first lens (L1), f2 is a focal length of the second lens (L2), f3 is a focal length of the third lens (L3), f4 is a focal length of the fourth lens (L4), f5 is a focal length of the fifth lens (L5), fG2 is a combined focal length of the second lens group (G2), and fi is a focal length of the optical lens (100) in a long object distance state corresponding to an infinite object distance.

3. The optical lens (100) according to claim 1, wherein the optical lens (100) further satisfies at least one of following relationships:

$$0.9 < fi/R1 < 1.5,$$

$$3.3 < fi/R3 < 4.9,$$

$$5.1 < fi/R4 < 8,$$

$$3.1 < fi/R5 < 5.8,$$

$$0.9 < fi/|R6| < 3.2,$$

$$0.9 < fi/|R7| < 5,$$

$$0.6 < fi/|R8| < 5.9,$$

$$0.6 < fi/|R9| < 4.9,$$

and

$$1.3 < fi/|R10| < 5.3;$$

wherein R1 is a radius of curvature of the object side surface (S1) of the first lens (L1) on the optical axis, R3 is a radius of curvature of the object side surface (S3) of the second lens (L2) on the optical axis, R4 is a radius of curvature of the image side surface (S4) of the second lens (L2) on the optical axis, R5 is a radius of curvature of the object side surface (S5) of the third lens (L3) on the optical axis, R6 is a radius of curvature of an image side surface (S6) of the third lens (L3) on the optical axis, R7 is a radius of curvature of an object side surface (S7) of the fourth lens (L4) on the optical axis, R8 is a radius of curvature of an image side surface (S8) of the fourth lens (L4) on the optical axis, R9 is a radius of curvature of an object side surface (S9) of the fifth lens (L5) on the optical axis, R10 is a radius of curvature of an image side surface (S10) of the fifth lens (L5) on the optical axis, and fi is a focal length of the optical lens (100) in a long object distance state corresponding to an infinite object distance.

4. The optical lens (100) according to claim 1, wherein the optical lens (100) further satisfies following relationship:

$$6.1 < TTL/ImgH < 7.2,$$

wherein TTL is a distance from the object side surface (S1) of the first lens (L1) to the imaging surface (IMG) on the optical axis, and ImgH is half of an image height corresponding to a maximum field of view of the optical lens (100).

5. The optical lens (100) according to claim 1, wherein the optical lens (100) further satisfies following relationship:

$$3.85<43.27\times fi/(2\times ImgH\times 23)<4.7,$$

wherein ImgH is half of an image height corresponding to a maximum field of view of the optical lens (100), and fi is a focal length of the optical lens (100) in a long object distance state corresponding to an infinite object distance.

6. The optical lens (100) according to claim 1, wherein the optical lens (100) further satisfies following relationship:

$$3.5<fi/BFL1<4.1,$$

wherein fi is a focal length of the optical lens (100) in a long object distance state corresponding to an infinite object distance, and BFL1 is a distance from an image side surface (S10) of the fifth lens (L5) to the imaging surface (IMG) on the optical axis in the long object distance state.

7. The optical lens (100) according to claim 1, further comprising a reflective element (LP) having a light incident surface (LP1), a reflective surface (RF), and a light exit surface (LP2), wherein the first lens group (G1) is located on a side where the light incident surface (LP1) of the reflective element (LP) is located, the second lens group (G2) is located on a side where the light exit surface (LP2) of the reflective element (LP) is located, and the reflective element (LP) is fixed relative to the imaging surface (IMG);

wherein imaging light passes through the first lens group (G1), is transmitted into the reflective element (LP) through the light incident surface (LP1), is reflected by the reflective surface (RF) to the light exit surface (LP2), and is transmitted to the second lens group (G2) in a series order;
the optical lens (100) further satisfies following relationship:

$$1.1mm<Bz1-Bz2<3.8mm,$$

wherein Bz1 is a distance from the light exit surface (LP2) of the reflective element (LP) to the object side surface (S3) of the second lens (L2) on the optical axis when the optical lens (100) is in a long object distance state corresponding to an infinite object distance, and Bz2 is a distance from the light exit surface (LP2) of the reflective element (LP) to the object side surface (S3) of the second lens (L2) on the optical axis when the optical lens (100) is in a short object distance state corresponding to a finite object distance.

8. The optical lens (100) according to claim 1, further comprising a reflective element (LP) having a light incident surface (LP1), a reflective surface (RF), and a light exit surface (LP2), wherein the first lens group (G1) is located on a side where the light incident surface (LP1) of the reflective element (LP) is located, the second lens group (G2) is located on a side where the light exit surface (LP2) of the reflective element (LP) is located, and the reflective element (LP) is fixed relative to the imaging surface (IMG);

wherein imaging light passes through the first lens group (G1), is transmitted into the reflective element (LP) through the light incident surface (LP1), is reflected by the reflective surface (RF) to the light exit surface (LP2), and is transmitted to the second lens group (G2) in a series order;
the optical lens (100) further satisfies following relationship:

$$2.7mm<Bz1<5mm,$$

wherein Bz1 is a distance from the light exit surface (LP2) of the reflective element (LP) to the object side surface (S3) of the second lens (L2) on the optical axis when the optical lens (100) is in a long object distance state corresponding to an infinite object distance.

9. The optical lens (100) according to claim 1, further comprising a reflective element (LP) having a light incident surface (LP1), a reflective surface (RF), and a light exit surface (LP2), wherein the first lens group (G1) is located on a side where the light incident surface (LP1) of the reflective element (LP) is located, the second lens group (G2) is located on a side where the light exit surface (LP2) of the reflective element (LP) is located, and the reflective element (LP) is fixed relative to the imaging surface (IMG);

wherein imaging light passes through the first lens group (G1), is transmitted into the reflective element (LP) through the light incident surface (LP1), is reflected by the reflective surface (RF) to the light exit surface (LP2),

and is transmitted to the second lens group (G2) in a series order;
the optical lens (100) further satisfies following relationship:

$$0.8\text{mm}<Bz2<1.8\text{mm},$$

wherein Bz2 is a distance from the light exit surface (LP2) of the reflective element (LP) to the object side surface (S3) of the second lens (L2) on the optical axis when the optical lens (100) is in a short object distance state corresponding to a finite object distance.

10. The optical lens (100) according to claim 1, further comprising a reflective element (LP) having a light incident surface (LP1), a reflective surface (RF), and a light exit surface (LP2), wherein the first lens group (G1) is located on a side where the light incident surface (LP1) of the reflective element (LP) is located, the second lens group (G2) is located on a side where the light exit surface (LP2) of the reflective element (LP) is located, and the reflective element (LP) is fixed relative to the imaging surface (IMG);

wherein imaging light passes through the first lens group (G1), is transmitted into the reflective element (LP) through the light incident surface (LP1), is reflected by the reflective surface (RF) to the light exit surface (LP2), and is transmitted to the second lens group (G2) in a series order;
the optical lens (100) further satisfies following relationship:

$$1.7<CT\_P/CT3<5.3;$$

wherein CT_P is a length of the reflective element (LP) on the optical axis, and CT3 is a thickness of the third lens (L3) on the optical axis.

11. The optical lens (100) according to claim 1, wherein the optical lens (100) further satisfies at least one of following relationships:

$$0.6<SD3/SD1<1,$$

$$0.8<CT2/SAG21<2.7,$$

and

$$0.5<CT2/SAG22<1.3;$$

wherein, SD1 is a maximum effective half-diameter of the object side surface (S1) of the first lens (L1), SD3 is a maximum effective half-diameter of the object side surface (S3) of the second lens (L2), CT2 is a thickness of the second lens (L2) on the optical axis, SAG21 is a distance from the maximum effective half-diameter of the object side surface (S3) of the second lens (L2) to an intersection of the object side surface (S3) of the second lens (L2) and the optical axis on the optical axis, and SAG22 is a distance from a maximum effective half-diameter of the image side surface (S4) of the second lens (L2) to an intersection of the image side surface (S4) of the second lens (L2) and the optical axis on the optical axis.

12. The optical lens (100) according to claim 1, wherein the optical lens (100) further satisfies at least one of following relationships:

$$1.1<CT3/CT2<8,$$

$$0.9<CT4/CT5<3.7,$$

$$1.5<\Sigma CT/CT23<3,$$

$$1.8<\Sigma CT/CT45<4.5,$$

$$1 < CT1/CT2 < 2.6,$$

$$0.4 < CT3/CT4 < 4.5,$$

and

$$0.2 < CT3/(CT1+CT2+CT4+CT5) < 1.1;$$

wherein, CT2 is a thickness of the second lens (L2) on the optical axis, CT3 is a thickness of the third lens (L3) on the optical axis, CT4 is a thickness of the fourth lens (L4) on the optical axis, CT5 is a thickness of the fifth lens (L5) on the optical axis, $\Sigma$CT is a sum of thicknesses of the first lens (L1), the second lens (L2), the third lens (L3), the fourth lens (L4), and the fifth lens (L5) on the optical axis, CT1 is a thickness of the first lens (L1) on the optical axis, CT23 is a sum of thicknesses of the second lens (L2) and the third lens (L3) on the optical axis, and CT45 is a sum of thicknesses of the fourth lens (L4) and the fifth lens (L5) on the optical axis.

13. The optical lens (100) according to claim 1, wherein the optical lens (100) further comprises a filter (IR), the filter (IR) is located between an image side surface (S10) of the fifth lens (L5) and the imaging surface (IMG), and the filter (IR) moves relative to the first lens group (G1) along the optical axis when the second lens group (G2) moves relative to the first lens group (G1).

14. A camera module (200), comprising an image sensor (201) and the optical lens (100) according to any one of claims 1 to 13, wherein the image sensor (201) is located on the image side of the optical lens (100).

15. An electronic device (300), comprising a housing (301) and the camera module (200) according to claim 14, wherein the camera module (200) is located on the housing (301).

FIG.1A

FIG.1B

FIG.1C

100

G 1

STO L1 LP G2 L2 L3 L4 L5 IR IMG

S1 S2 LP1 LP2 S3 S4 S5 S6 S7 S8 S11 S12

## FIG.2A

Spherical aberration

1.00

0.75 ———— 650nm
—·—·— 610nm
0.50 ·········· 555nm
—··—··— 510nm
0.25 —···—···— 470nm
— — — 435nm

-0.2 -0.1 0.0 0.1 0.2
Deviation of focus poin (mm)
(A)

Astigmatism
Image height (mm)

T S 4.36

3.27
——— S(Sagittal)
2.18 — — — T(tangential)

1.09

-0.50 -0.25 0.00 0.25 0.50
Deviation of focus poin (mm)
(B)

Distortion
Image height (mm)

4.36

3.27

2.18

1.09

-1.0 -0.5 0.0 0.5 1.0
Distortion (%)
(C)

## FIG.2B

L1

STO G2

LP1 LP2 L2 L3 L4 L5 IR

LP IMG

RF

## FIG.2C

FIG.3A

FIG.3B

100

G 1

STO

L1

LP

G2

L2 L3 L4 L5

IR

IMG

S3

S4 S5 S6 S7 S8

S9 S10

S1 S2 LP1

LP2

## FIG.4A

Spherical aberration

1.00

0.75 ———— 650nm

-·-·-·- 610nm

0.50 ············ 555nm

-··-··- 510nm

0.25 -···-···- 470nm

– – – 435nm

-0.50 -0.25 0.00 0.25 0.50
Deviation of focus poin (mm)
（A）

Astigmatism
Image height (mm)

T S 4.36

3.27

——— S(Sagittal)

- - - T(tangential)

2.18

1.09

-0.50 -0.25 0.00 0.25 0.50
Deviation of focus poin (mm)
（B）

Distortion
Image height (mm)

4.36

3.27

2.18

1.09

-1.00 -0.50 0.0 0.50 1.00
Distortion (%)
（C）

## FIG.4B

FIG.5A

FIG.5B

100

FIG.6A

FIG.6B

FIG.7A

Spherical aberration

1.00
0.75
0.50
0.25

650nm
610nm
555nm
510nm
470nm
435nm

-0.08  -0.04   0.0   0.04  0.08
Deviation of focus poin (mm)
(A)

Astigmatism
Image height (mm)

T    S   4.36

3.27

2.18

1.09

S(Sagittal)
T(tangential)

-0.50 -0.25  0.0  0.25  0.50
Deviation of focus poin (mm)
(B)

Distortion
Image height (mm)

4.36

3.27

2.18

1.09

-2   -1    0    1    2
Distortion (%)
(C)

FIG.7B

FIG.8A

FIG.8B

FIG.9A

FIG.9B

FIG.10A

FIG.10B

FIG.11A

FIG.11B

100

G 1

STO L1 LP G2 L2 L3 L4 L5 IR IMG

S1 S2 LP1 LP2 S3 S4 S5 S6 S7 S8 S9 S10

## FIG.12A

Spherical aberration

1.00
0.75
0.50
0.25

650nm
610nm
555nm
510nm
470nm
435nm

-0.50 -0.25 0.0 0.25 0.50
Deviation of focus poin (mm)
(A)

Astigmatism
Image height (mm)

T S 4.36

3.27 S(Sagittal)
------ T(tangential)

2.18

1.09

-0.50 -0.25 0.0 0.25 0.50
Deviation of focus poin (mm)
(B)

Distortion
Image height (mm)

4.36

3.27

2.18

1.09

-1.0 -0.5 0.0 0.5 1.0
Distortion (%)
(C)

## FIG.12B

100

# FIG.13A

Spherical aberration

650nm
610nm
555nm
510nm
470nm
435nm

-0.08 -0.04 0.00 0.04 0.08
Deviation of focus poin (mm)
(A)

Astigmatism
Image height (mm)

S(Sagittal)
T(tangential)

-0.2 -0.1 0.0 0.1 0.2
Deviation of focus poin (mm)
(B)

Distortion
Image height (mm)

4.36
3.27
2.18
1.09

-5.0 -2.5 0.0 2.5 5.0
Distortion (%)
(C)

# FIG.13B

FIG.14A

FIG.14B

FIG.15

FIG.16